# EUROPÄISCHE PATENTSCHRIFT

(11) **EP 3 970 267 B1**
(45) Veröffentlichungstag und Bekanntmachung des Hinweises auf die Patenterteilung: **26.08.2026**
(21) Anmeldenummer: 20740194.4
(22) Anmeldetag: 28.05.2020
(51) Int. Cl.: H02K 15/064, B25J 15/00

(54) **GREIFVORRICHTUNG UND GREIFVERFAHREN FÜR HAIRPINS**
GRIPPING APPARATUS AND GRIPPING METHOD FOR HAIRPINS
DISPOSITIF DE PRÉHENSION ET PROCÉDÉ DE PRÉHENSION DESTINÉS À DES ÉPINGLES À CHEVEUX

(30) Priorität: 28.05.2019 DE 102019114221
(43) Veröffentlichungstag der Anmeldung: 23.03.2022
(73) Patentinhaber: Grob-Werke GmbH & Co. KG, 87719 Mindelheim (DE)
(72) Erfinder: DREHER, Clemens, 87719 Mindelheim (DE)
(74) Vertreter: KASTEL Patentanwälte PartG mbB
(86) Internationale Anmeldenummer: PCT/DE2020/100451
(87) Internationale Veröffentlichungsnummer: WO 2020/239174

(56) Entgegenhaltungen:
- EP-A2- 1 375 022
- WO-A1-2018/233774
- WO-A2-2018/039806
- DE-A1- 102017 123 670
- US-A- 5 182 932
- US-A1- 2018 233 995
- US-B2- 8 803 398

## Beschreibung

Die Erfindung betrifft eine Greifvorrichtung zum Greifen zumindest eines Leitungselements sowie ein Verfahren zum Greifen zumindest eines Leitungselements mittels der erfindungsgemäßen Greifvorrichtung.

Die Greifvorrichtung und das Greifverfahren sind insbesondere verwendbar bei einer Herstellung eines mit Spulen versehenen Bauteils einer elektrischen Maschine. Insbesondere sind die Greifvorrichtung und das Greifverfahren verwendbar bei der Herstellung eines Stators einer elektrischen Maschine, wobei Hairpins in Nuten eines Gehäuses des Stators eingeführt werden. Dabei sind die Greifvorrichtung und das Verfahren insbesondere zum Greifen von Leitungselementen, welche als Hairpins oder elektrische Leiter ausgebildet sein können, für Statoren oder Rotoren elektrischer Maschinen geeignet.

Unter elektrischen Maschinen werden insbesondere Maschinen zum Umwandeln elektrischer Energie in Bewegungsenergie und/oder Maschinen zum Umwandeln von Bewegungsenergie in elektrische Energie verstanden. Insbesondere sind darunter Elektromotoren und Generatoren zu verstehen.

Hairpins sind U-förmige elektrische Leiter, die in elektrischen Maschinen eingesetzt werden. Die elektrischen Leiter werden von einer Seite in ein Blechpaket der elektrischen Maschine eingeführt. Bei einer Ausgestaltung eines Herstellverfahrens für eine Spulenwicklung eines Bauteils einer elektrischen Maschine werden die elektrischen Leiter nach dem Einführen auf der Gegenseite geweitet, geschränkt, geschnitten und anschließend verschweißt. Dadurch ergeben sich geschlossene Stromkreise.

Eine Spulenwicklung für ein Bauteil einer elektrischen Maschine kann aus mehreren sogenannten Hairpinkränzen aufgebaut sein. Es handelt sich dabei z.B. um ringförmig angeordnete Hairpins, die bereits vor dem Einführen in das Bauteil zum Einführen zusammengefügt werden. Bei Ausgestaltungen eines solchen Verfahrens unterscheiden sich die Kränze untereinander durch ihre jeweiligen Durchmesser. Zum Beispiel sind die Kränze unterteilt in Außenkranz, Mittelkranz und Innenkranz. Jeder Kranz kann wiederum aus mindestens zwei Lagen an Hairpins oder Hairpin-Schenkeln gebildet sein. Mit den Hairpin-Schenkeln sind die zwei Leitungselementendabschnitte, also die Enden oder Endbereiche der Hairpins, gemeint. Die Hairpins eines Kranzes können zum Beispiel den einen Schenkel in der inneren und den anderen in der äußeren Lage in einem Blechpaket eines Stators oder/oder Rotors haben. Sie können auch beide Schenkel in der gleichen Lage, das heißt äußeren oder inneren Lage, haben.

Eine Spulenwicklung eines Bauteils einer elektrischen Maschine kann aus vielen unterschiedlich ausgebildeten Hairpins gebildet sein. Dabei können sich die Hairpins in mehreren Punkten unterscheiden. Die Hairpins können sich z.B. in einer Dach-Biegung, einer 3D-Biegung und/oder einer Sprungbiegung unterscheiden. Eine Dach-Biegung beeinflusst unter anderem den Abstand der beiden Schenkel zueinander oder wie viele Nuten eines Bauteils, wie insbesondere Stators und/oder Rotors, von einem zum anderen Schenkel übersprungen werden. 3D-Biegungen können sich, je nachdem welchem Kranz ein Hairpin zugeordnet ist, in einem Kopfbereich der Hairpins durch einen spezifischen Kranzdurchmesser unterscheiden. Die Sprungbiegung definiert, welcher Schenkel in welcher Lage des Bauteils angeordnet ist. Das Zusammenspiel dieser drei Umformschritte - der Dach-Biegung, der 3D-Biegung und/oder der Sprungbiegung - definiert die Geometrie des Hairpins. Diese unterschiedlichen Geometrien von Hairpins sollen für die Weiterverarbeitung mit einer einheitlichen Greifvorrichtung gegriffen werden.

Bei einer Ausgestaltung eines Herstellverfahrens für die Spulenwicklung werden, nachdem alle Umformschritte durchgeführt worden sind, in einer Montagemaschine alle Hairpins für die folgenden Montage definiert gegriffen. Ein Folgeschritt kann beispielsweise das Vorstecken der Hairpins zu Kränzen darstellen. Um eine definierte Positionierung durchführen zu können, sollte der Hairpin an beiden Schenkeln gegriffen werden können.

Bei einer Ausgestaltung eines Herstellverfahrens für eine Bauteil einer elektrischen Maschine werden die Hairpins zu Kränzen gesteckt, um anschließend daraus Wicklungen für das Bauteil, wie insbesondere einen Stator und/oder einen Rotor zu bilden. Hierzu ist beispielsweise in der
[1] WO 2018/233774 A1
   eine Vorrichtung zur Herstellung eines mit Wicklungen versehenen Maschinenelements, wie beispielsweise eines Stators oder eines Rotors, für eine elektrische Maschine beschrieben. Die elektrische Maschine umfasst mindestens eine Hilfsvorrichtung zur Bereitstellung vorgesteckter Hairpins, die so zueinander ausgerichtet sind, wie im herzustellenden Maschinenelement. Ferner umfasst die Vorrichtung eine Fügeeinrichtung zur Entnahme der zueinander ausgerichteten Hairpins aus der Hilfsvorrichtung und zum Einbringen in ein Maschinenelement.
   Auch die
[2] WO 2018/233771 A1
   beschäftigt sich mit einer Vorrichtung zum Fügen elektrischer Leiter in ein Maschinenelement einer elektrischen Maschine. Hierzu umfasst die Vorrichtung eine Sammelaufnahme zur Bereitstellung einer Anordnung aus einem oder mehreren Kränzen, die aus elektrisch leitfähigen Hairpins gebildet sind, und eine Fügeeinrichtung zur Entnahme der Kranzanordnung aus der Sammelaufnahme und zum Einbringen der Kranzanordnung in das Maschinenelement.
   In der
[3] US 2018/0233995 A1
   ist ein Ausrichtmechanismus beschrieben. Der Ausrichtmechanismus umfasst eine Grundplatte, auf der Führungsschienen verlaufen. Auf diesen Führungsschienen sind mehrere Halter angeordnet. Die Halter weisen Haltenuten auf. In diese Haltenuten werden Schenkel von Leiterelemente eingesetzt oder eingesteckt.
   In der
[4] US 8 803 398 B2
   ist eine elektrische Maschine beschrieben. Die elektrische Maschine ist in einem Roboter einsetzbar. Dieser Roboter weist diverse solcher elektrischer Maschinen und zwei Greifarme auf. Der Roboter ist dazu eingerichtet, einen Gegenstand zu greifen.
   In der
[5] DE 10 2017 123 670 A1
   ist eine Greifvorrichtung beschrieben, welche eine erste (obere) Greifeinrichtung und eine zweite (untere) Greifeinrichtung umfasst. Die erste (obere) Greifeinrichtung greift die Anordnung von Spulenelementen in einem oberen Abschnitt und die zweite (untere) Greifeinrichtung befindet sich im unteren Abschnitt von Beinen der Spulenelemente und greift dort die Spulenelemente.
   Aus der
[6] EP 1 375 022 A2
   ist eine Handhabungsvorrichtung zum Überführen von geraden Metallstangen zur Betonverstärkung von Beton aus einer schrägen Ebene zu einer Biegestation, wo die Metallstangen dann an ihren Enden gebogen werden sollen, und zum Überführen von gebogenen Metallstangen von der Biegestation zu eine nächsten Station. Die Handhabungsvorrichtung weist einen ersten und einen zweiten Greifer auf, die linear miteinander ausgerichtet und auf einer gemeinsamen Schiene linear beweglich sind und die beide um eine sich in der Richtung der Schiene erstreckende Achse schwenkbar sind, um auch auf einer Schräge liegende Stangen gemeinsam an ihrem Mittelteil zwischen den zu biegenden Enden greifen zu können.
   Aus der
[7] US 5 182 932 A
   ist ebenfalls eine Vorrichtung zum Biegen von Stahlstäben zu Betonbewehrungselementen bekannt mit einer Einrichtung zum Zuführen von Stäben zu einer Überführeinrichtung, mit der jeweils eine Stabschar in Stabquerrichtung zwischen Biegeorganen einführbar ist. Die Überführungseinrichtung weist einen ersten und einen zweiten Greifer auf, die zueinander ausgerichtet sind, um gemeinsam geradlinige Mittelteile der zu biegenden Stäbe zu erfassen. Die Greifer sind gesteuert derart betätigbar, sie von einer ersten Stellung, in welcher sie von der Stabzuführungseinrichtung mehrere Stäbe aufnehmen und diese festklemmen, in eine zweite Stellung verschwenkbar sind, in welcher sie die Stäbe in den Zwischenraum zwischen den Biegeorganen einführen.

Die Erfindung befasst sich dagegen mit einem Greifen von Hairpins bei der Herstellung eines mit Spulen versehenen Bauteils einer elektrischen Maschine. Insbesondere sind die Greifvorrichtung und das Greifverfahren verwendbar bei der Herstellung eines Stators einer elektrischen Maschine, wobei Hairpins in Nuten eines Gehäuses des Stators eingeführt werden. Aus technischer Sicht stellen die sehr unterschiedlichen Geometrien der Hairpins eines Stators und/oder Rotors bezüglich des Handlings eine Herausforderung dar. Vor allem, wenn alle Greif- und Handlingsprozesse mit einer Greifvorrichtung umzusetzen sind. Die vielen verschiedenen Schenkelstellungen der Hairpins machen eine Greifvorrichtung oder ein Greifsystem sehr komplex und teuer.

Die Erfindung hat sich daher zur Aufgabe gestellt, eine Greifvorrichtung sowie ein Verfahren zum Greifen zumindest eines Leitungselements bereitzustellen, welches besonders einfach, zuverlässig, insbesondere hinsichtlich der verschiedenen Schenkelstellungen der Hairpins, und kostengünstig betrieben werden kann.

Zum Lösen dieser Aufgabe schafft die Erfindung eine Greifvorrichtung zum Greifen zumindest eines Leitungselements, ein Verfahren zum Greifen zumindest eines Leitungselements sowie eine Hairpin-Handhabungsvorrichtung zum Handhaben von Hairpins zur Herstellung einer Spulenwicklung eines Bauteils einer elektrischen Maschine mit den Merkmalen der unabhängigen Patentansprüche. Vorteilhafte Ausgestaltungen der Erfindung sind in den abhängigen Patentansprüchen angegeben.

Die Erfindung schafft gemäß einem Aspekt davon eine Greifvorrichtung zum Greifen zumindest eines Leitungselements von mehreren Leitungselementen, wobei die Greifvorrichtung dazu eingerichtet ist, unterschiedliche Geometrien von Leitungselementen zu greifen, wobei das Leitungselement einen ersten Leitungselementendabschnitt und einen zweiten Leitungselementendabschnitt umfasst, umfassend:
- einen Grundkörper,
- eine erste Greifeinrichtung, welche einen ersten Greifer umfasst, wobei die erste Greifeinrichtung dazu eingerichtet ist, den ersten Leitungselementendabschnitt oder den zweiten Leitungselementendabschnitt eines vorbestimmten Leitungselements mittels des ersten Greifers zu greifen und
- eine zweite Greifeinrichtung, welche einen zweiten Greifer umfasst, welcher relativ zu dem Grundkörper beweglich angeordnet ist, wobei die zweite Greifeinrichtung dazu eingerichtet ist, den zweiten Greifer relativ zu dem ersten Greifer derart zu bewegen, dass der zweite Greifer das vorbestimmte Leitungselement an dem zweiten Leitungselementendabschnitt oder an dem ersten Leitungselementendabschnitt greift. Die Greifvorrichtung ist dazu eingerichtet, die einzelnen Leitungselemente, die zeitlich nacheinander auf der vorbestimmten Position angeordnet werden, einzeln zu greifen.

Es ist bevorzugt, dass der erste Greifer relativ zu dem Grundkörper stationär ausgebildet ist.

Erfindungsgemäß ist die Greifvorrichtung zum Greifen eines U-förmig gebogenen Spulenelements in Form eines elektrisch leitfähigen Hairpins ausgebildet.

Es ist bevorzugt, dass der erste Greifer und/oder die erste Greifeinrichtung und/oder ein erstes Armelement, an welchem der erste Greifer angeordnet ist, relativ zu dem Grundkörper und/oder relativ dem zweiten Greifer beweglich angeordnet ist.

Es ist bevorzugt, dass der erste Greifer und/oder die erste Greifeinrichtung und/oder ein erstes Armelement, an welchem der erste Greifer angeordnet ist, linear beweglich angeordnet ist.

Es ist bevorzugt, dass der erste Greifer und/oder die erste Greifeinrichtung und/oder ein erstes Armelement, insbesondere um eine Drehachse, drehbar gelagert ist.

Es ist bevorzugt, dass der erste Greifer um einen Mittelpunkt des zu greifenden ersten Leitungselementendabschnitts oder zweiten Leitungselementendabschnitts drehbar ist.

Es ist bevorzugt, dass der erste Greifer und der zweite Greifer in ihrer Höhe zueinander, insbesondere in eine Hochrichtung der Greifvorrichtung, versetzt angeordnet sind.

Es ist bevorzugt, dass die Greifvorrichtung eine, insbesondere erste, Bewegungseinheit umfasst, welche dazu eingerichtet ist, den ersten Greifer und/oder die erste Greifeinrichtung und/oder ein erstes Armelement, an welchem der erste Greifer angeordnet ist, relativ zu dem Grundkörper zu bewegen.

Es ist bevorzugt, die zweite Greifeinrichtung eine Bewegungseinheit umfasst, welche dazu eingerichtet ist, den zweiten Greifer relativ zu dem Grundkörper zu bewegen.

Vorzugsweise hat die Bewegungseinheit ein erstes Zahnrad und ein zweites Zahnrad, an welchem der zweite Greifer angeordnet ist, wobei das erste Zahnrad in das zweite Zahnrad eingreift.

Vorzugsweise weist die Bewegungseinheit ferner eine Antriebseinheit auf, welche weiter vorzugsweise dazu eingerichtet ist, das erste Zahnrad zum Bewegen des zweiten Zahnrades anzutreiben.

Es ist bevorzugt, dass die zweite Greifeinrichtung eine Aufnahmeeinheit umfasst, an welcher das zweite Zahnrad angeordnet ist, wobei die Aufnahmeeinheit zumindest einen Aufnahmebereich umfasst, wobei das zweite Zahnrad zumindest ein Führungselement aufweist, welches in den Aufnahmebereich eingreift, wobei der Aufnahmebereich eine Bewegungsbahn des zweiten Greifers vorgibt.

Es ist bevorzugt, dass der Aufnahmebereich eine kreisbogenförmige Form aufweist. Vorzugsweise ist bei der Bewegung des zweiten Zahnrades das Führungselement derart in dem Aufnahmebereich geführt, dass sich der zweite Greifer zumindest teilweise entlang einer Kreisbahn bewegt.

Es ist bevorzugt, dass der Aufnahmebereich als eine Nut oder ein Langloch ausgebildet ist.

Es ist bevorzugt, dass die zweite Greifeinrichtung oder die Greifvorrichtung eine, insbesondere zweite, Bewegungseinheit umfasst, welche dazu eingerichtet ist, den zweiten Greifer und/oder ein zweites Armelement, an welchem der zweite Greifer angeordnet ist, relativ zu dem Grundkörper zu bewegen.

Es ist bevorzugt, dass die zweite Greifeinrichtung eine Bewegungseinheit umfasst, welche dazu eingerichtet ist, den zweiten Greifer und/oder ein zweites Armelement, an welchem der zweite Greifer angeordnet ist, relativ zu dem Grundkörper entlang einer Kreisbahn zu bewegen.

Es ist bevorzugt, dass der zweite Greifer und/oder ein zweites Armelement, an welchem der zweite Greifer angeordnet ist, insbesondere um eine Drehachse, drehbar gelagert ist, wobei die zweite Greifeinrichtung eine Bewegungseinheit umfasst, welche dazu eingerichtet ist, den zweiten Greifer und/oder das zweite Armelement zu drehen.

Es ist bevorzugt, dass der Grundkörper eine Grundplatte umfasst, wobei an der Grundplatte ein erstes Armelement und ein zweites Armelement angeordnet sind. Vorzugsweise erstrecken sich die beiden Armelemente vertikal zur Grundplatte. Vorzugsweise sind die erste Greifeinrichtung an dem ersten Armelement und die zweite Greifeinrichtung an dem zweiten Armelement angeordnet.

Es ist bevorzugt, dass der erste Greifer und der zweite Greifer jeweils zwei Greifbacken aufweisen, wobei eine jeweilige Greiffläche der jeweiligen Greifbacken konkav ausgebildet ist.

Es ist bevorzugt, dass der erste Greifer zwei Greifbacken aufweist, wobei jeweils eine Greifbacke zwei Greifbackenelemente umfasst, wobei ein erstes Greifbackenelement einer ersten Greifbacke einem ersten Greifbackenelement einer zweiten Greifbacke und ein zweites Greifbackenelement der ersten Greifbacke einem zweiten Greifbackenelement der zweiten Greifbacke zugeordnet ist, wobei die ersten Greifbackenelemente und die zweiten Greifbackenelemente einander gegenüberliegend angeordnet sind.

Es ist bevorzugt, dass der erste Greifer als Doppelgreifer ausgebildet ist.

Es ist bevorzugt, dass der Grundkörper an eine Transporteinrichtung zum Bewegen der Greifvorrichtung anlenkbar ist.

Gemäß einem weiteren Aspekt betrifft die Erfindung eine Hairpin-Handhabungsvorrichtung zum Handhaben von Hairpins zur Herstellung einer Spulenwicklung eines Bauteils einer elektrischen Maschine, umfassend eine Greifvorrichtung nach einer der voranstehenden Ausgestaltungen.

Vorzugsweise weist die Hairpin-Handhabungsvorrichtung eine Transporteinrichtung zum Bewegen der Greifvorrichtung sowie eine Steuerung auf.

Gemäß einem weiteren Aspekt betrifft die Erfindung ein Verfahren zum Greifen zumindest eines Leitungselements mittels einer Greifvorrichtung, wobei die Greifvorrichtung dazu eingerichtet ist, unterschiedliche Geometrien von Leitungselementen zu greifen, wobei die Greifvorrichtung einen Grundkörper, eine erste Greifeinrichtung, welche einen ersten Greifer umfasst, und eine zweite Greifeinrichtung aufweist, welche einen zweiten Greifer umfasst, welcher relativ zu dem Grundkörper beweglich angeordnet ist, wobei die einzelnen Leitungselemente zeitlich nacheinander auf der vorbestimmten Position angeordnet und dort einzeln durch die Greifvorrichtung gegriffen werden, umfassend die Schritte:
- Greifen eines ersten Leitungselementendabschnitts oder eines zweiten Leitungselementendabschnitts jedes vorbestimmten Leitungselements mittels des ersten Greifers der ersten Greifeinrichtung an einer vorbestimmten Position;
- Bewegen des zweiten Greifers relativ zu dem ersten Greifer zur Anpassung an eine Position des zweiten Leitungselementendabschnitt des vorbestimmten Leitungselements oder des ersten Leitungselementendabschnitts des vorbestimmten Leitungselements und
- Greifen des zweiten Leitungselementendabschnitts des Leitungselements oder des ersten Leitungselementendabschnitts des Leitungselements mittels des zweiten Greifers.

Dabei ist die Reihenfolge der Verfahrensschritte grundsätzlich variabel. Insbesondere kann der zweite Greifer bereits vor dem Greifen des ersten Leitungselementendabschnitts relativ zu dem ersten Greifer zur Anpassung an eine Position eines zweiten Leitungselementendabschnitt des vorbestimmten Leitungselements bewegt werden. Auch können beide Leitungselementendabschnitte gleichzeitig gegriffen werden, insbesondere nach vorheriger Ausrichtung des zweiten Greifers.

Es ist bevorzugt, dass der zweite Greifer zum Greifen des zweiten Leitungselementendabschnitts des vorbestimmten Leitungselements oder des ersten Leitungselementendabschnitts des vorbestimmten Leitungselements entlang einer vorbestimmten Kreisbahn zu dem zweiten Leitungselementendabschnitt oder dem ersten Leitungselementendabschnitt bewegt wird.

Es ist bevorzugt, dass mit der Greifvorrichtung zeitlich nacheinander mehrere Leitungselemente gegriffen werden, wobei vor dem Greifen des jeweiligen Leitungselementendabschnitts das Leitungselement um eine Schenkelachse eines der beiden Leitungselementendabschnitte gedreht wird, sodass der andere Leitungselementendabschnitt auf einer Kreisbahn angeordnet ist.

Es ist besonders bevorzugt, dass mit der Greifvorrichtung zeitlich nacheinander mehrere Leitungselemente gegriffen werden, wobei vor dem Greifen des jeweiligen Leitungselements die Greifvorrichtung derart relativ zu dem jeweils zu greifenden Leitungselement ausgerichtet und der zweite Greifer derart relativ zu dem ersten Greifer bewegt wird, dass der erste und der zweite Leitungselementabschnitt des Leitungselements gleichzeitig jeweils durch den ersten und den zweiten Greifer gegriffen werden können.

Dabei erhält beispielsweise die Steuerung der Greifvorrichtung beispielsweise von einer Zuführvorrichtung zur Zuführung der Leitungselemente zu der Greifvorrichtung Informationen über die konkrete Geometrie eines jeweils zu greifenden Leitungselements, beispielsweise den Abstand der beiden Leitungselementabschnitte sowie seine Lage auf der Zuführvorrichtung. Die Steuerung richtet dann die Greifvorrichtung derart relativ zum zu greifenden Leitungselement aus und positioniert den zweiten Greifer derart relativ zum ersten Greifer, dass im Anschluss daran der erste Leitungselementabschnitt durch den ersten Greifer und der zweite Leitungselementabschnitt durch den zweiten Greifer gleichzeitig gegriffen werden können.

Es ist bevorzugt, dass nach dem Greifen des vorbestimmten Leitungselements das Leitungselement, insbesondere in ein Adapternest, mittels der Greifvorrichtung vorgesteckt wird.

Es ist bevorzugt, dass zeitlich nacheinander mehrere Leitungselemente zu einem Kranz vorgesteckt werden.

Es ist bevorzugt, dass zum Vorstecken die erste Greifeinrichtung und die zweite Greifeinrichtung positioniert werden, sodass der erste Greifer innerhalb einer Kreisbahn und der zweite Greifer außerhalb der Kreisbahn angeordnet werden.

Es ist bevorzugt, dass zum Vorstecken die erste Greifeinrichtung und die zweite Greifeinrichtung positioniert werden, sodass der erste Greifer außerhalb der Kreisbahn und der zweite Greifer innerhalb der Kreisbahn angeordnet werden.

Es ist bevorzugt, dass zum Vorstecken die erste Greifeinrichtung und die zweite Greifeinrichtung positioniert werden, sodass der erste Greifer außerhalb der Kreisbahn und der zweite Greifer außerhalb der Kreisbahn angeordnet werden.

Es ist bevorzugt, dass zum Vorstecken die erste Greifeinrichtung und die zweite Greifeinrichtung positioniert werden, sodass der erste Greifer innerhalb der Kreisbahn und der zweite Greifer innerhalb der Kreisbahn angeordnet werden.

Ausgestaltungen der Erfindung betreffen eine Greifvorrichtung zum Greifen zumindest eines Leitungselements von mehreren Leitungselementen, wobei die zu greifenden Leitungselemente unterschiedliche Geometrien aufweisen, wobei das Leitungselement einen ersten Leitungselementendabschnitt und einen zweiten Leitungselementendabschnitt umfasst. Mit "Leitungselement" ist beispielsweise ein elektrischer Leiter oder ein elektrisch leitfähiges Element, gemeint, wobei die erfindungsgemäß zu greifenden Leiterelemente Hairpins sind. Mit "unterschiedlichen Geometrien" ist insbesondere gemeint, dass insbesondere nicht alle Leitungselemente gleich ausgebildet sind. Mit anderen Worten können beispielsweise Schenkelabstände, also insbesondere die Abstände zwischen den Leitungselementendabschnitten, der jeweiligen zu greifenden Leitungselemente unterschiedlich oder verschieden sein, also variieren. Unter den mehreren Leitungselementen können auch einzelne Leitungselemente gleich oder identisch ausgebildet sein. Der "Leitungselementendabschnitt" kann insbesondere ein Schenkel eines Hairpins sein. Der "Leitungselementendabschnitt" ist vorzugsweise ein Endbereich oder ein Ende oder ein Endabschnitt oder ein Leitungsende des zumindest einen Leitungselements. Zum Greifen der zwei Leitungselementendabschnitte des zumindest einen Leitungselements kann insbesondere von einem gemeinsamen Ansatzpunkt ausgegangen werden. Ein "Greifen" kann insbesondere ein Nehmen und/oder ein Halten und/oder ein Aufnehmen des zumindest einen Leitungselements umfassen.

Erfindungsgemäß ist die Greifvorrichtung zum Greifen eines U-förmig gebogenen Spulenelements, nämlich eines elektrisch leitfähigen Hairpins, ausgebildet. Das zumindest eine Leitungselement weist bevorzugt eine 3-dimensionale Form oder eine 3-D Form auf. Das zumindest eine Leitungselement ist U-förmig gebogen ausgebildet. Das zumindest eine Leitungselement kann mehrere Winkel aufweisen, aus denen sich eine Dachform ergibt, die auch als Hausdachform bezeichnet wird. Dabei können die Winkel und Schenkellängen des Leitungselements je nach der erforderlichen Form variieren. Das zumindest eine Leitungselement ist bevorzugt in seinem Dachbereich in eine Richtung gebogen, die senkrecht zur Ebene des Leitungselements verläuft, sodass eine Krümmung im Dachbereich geformt ist.

Die Greifvorrichtung umfasst einen Grundkörper, eine erste Greifeinrichtung und eine zweite Greifeinrichtung. Die erste Greifeinrichtung weist einen ersten Greifer auf. Der "Grundkörper" kann insbesondere ein Gestell oder ein Träger sein. Ein "Greifer" kann insbesondere eine aus zumindest zwei beweglichen Backen oder Greifbacken bestehende Vorrichtung sein, mit welcher ein Element oder ein Bauteil oder ein Werkstück aufgenommen und an eine andere Stelle oder Position oder einen anderen Ort gebracht oder verlagert werden kann. Die erste Greifeinrichtung ist dazu eingerichtet, den ersten Leitungselementendabschnitt oder den zweiten Leitungselementendabschnitt eines vorbestimmten Leitungselements mittels des ersten Greifers zu greifen. Vorzugsweise kann die erste Greifeinrichtung ein vorbestimmtes Leitungselement, insbesondere an einer für den ersten Greifer vorbestimmten Greifposition oder Greifpunkt, an dem ersten Leitungselementendabschnitt oder dem zweiten Leitungselementendabschnitt aufnehmen. Die zweite Greifeinrichtung umfasst einen zweiten Greifer, welcher relativ zu dem Grundkörper oder zu der ersten Greifeinrichtung beweglich angeordnet ist. Mit anderen Worten ist der zweite Greifer beweglich gelagert. Mit anderen Worten kann der zweite Greifer relativ zu dem Grundkörper oder zu der ersten Greifeinrichtung bewegt werden. Insbesondere bleibt der Grundkörper dabei stationär, also bewegt sich nicht. Die zweite Greifeinrichtung ist ferner dazu eingerichtet, den zweiten Greifer relativ zu dem ersten Greifer derart zu bewegen, dass der zweite Greifer das vorbestimmte Leitungselement an dem zweiten Leitungselementendabschnitt oder dem ersten Leitungselementendabschnitt greift. Vorzugsweise kann der zweite Greifer zu dem zweiten Leitungselementendabschnitt oder dem ersten Leitungselementendabschnitt gefahren oder bewegt werden und den zweiten Leitungselementendabschnitt oder den ersten Leitungselementendabschnitt, insbesondere an einer für den zweiten Greifer vorbestimmten Greifposition oder Greifpunkt, greifen oder aufnehmen. Mit anderen Worten wird insbesondere durch den zweiten Greifer der vorbestimmte Greifpunkt angefahren, um den zweiten Leitungselementendabschnitt oder den ersten Leitungselementendabschnitt definiert greifen zu können. Besonders bevorzugt ist der zweite Greifer dazu eingerichtet, unterschiedliche Positionen der zweiten Leitungselementendabschnitte oder unterschiedliche Schenkelpositionen der Leitungselemente anzufahren.

Der vorzugsweise relativ zu dem Grundkörper stationäre Greifer kann z.B. zusammen mit dem Grundkörper an eine definierte Aufnahmeposition, an der die ersten Leitungselementabschnitte aller zu greifenden Leiter angeliefert werden, angefahren werden. Der zweite Greifer kann je nach relativer unterschiedlicher Position der Leiterelementabschnitte zueinander in seiner Position relativ zu dem ersten Greifer angepasst werden. So kann die Greifvorrichtung auf einfache Art und Weise z.B. an unterschiedliche Hairpins angepasst werden, wobei stets eine exakte Positionierung der Hairpins erfolgen kann.

Durch den beweglichen zweiten Greifer ergibt sich insbesondere der Vorteil, dass der jeweilige Leitungselementendabschnitt des zumindest einen Leitungselements flexibel angefahren werden kann. Hierdurch können die jeweiligen Leitungselemente auf besonders einfache und zuverlässige Art und Weise gegriffen werden. Durch die Greifvorrichtung können ferner schnelle Greiferbewegungen umgesetzt werden, ohne dass es zu Schwingungen der Leitungselemente kommt, da die Leitungselemente definiert gegriffen werden. Ferner ist das Anfahren der unterschiedlichen Schenkelpositionen durch einen Aktor - den zweiten Greifer - möglich, wodurch die Greifvorrichtung besonders kompakt und/oder kostengünstig aufgebaut ist.

Eine vorteilhafte Ausführungsform sieht vor, dass der erste Greifer relativ zu dem Grundkörper stationär ausgebildet ist. Mit anderen Worten bewegt sich der erste Greifer relativ zu dem Grundkörper nicht. Mit anderen Worten ist der erste Greifer unbeweglich ausgebildet. Insbesondere kann der erste Greifer an dem Grundkörper unbeweglich angeordnet sein. Entsprechend kann sich nur der zweite Greifer zu dem Grundkörper bewegen aber nicht der erste Greifer. Insbesondere kann während eines Greifvorgangs, also dem Greifen des zumindest einen Leitungselements, der erste Greifer in seiner Position verbleiben, während der zweite Greifer bewegt wird. Durch die bewegliche Ausgestaltung eines der beiden Greifer ist der Aufbau der Greifvorrichtung besonders kompakt und einfach gestaltet.

Alternativ kann der erste Greifer und/oder ein erstes Armelement, an dem der erste Greifer angeordnet ist und/oder die erste Greifeinrichtung relativ zu dem Grundkörper und/oder relativ dem zweiten Greifer beweglich angeordnet sein. Mit anderen Worten ist der erste Greifer und/oder ein erstes Armelement, an dem der erste Greifer angeordnet ist und/oder die erste Greifeinrichtung beweglich gelagert. Mit anderen Worten kann der erste Greifer relativ zu dem Grundkörper oder zu der zweiten Greifeinrichtung bewegt werden. Insbesondere bleibt der Grundkörper dabei stationär, also bewegt sich nicht. Die erste Greifeinrichtung ist ferner bevorzugt dazu eingerichtet, den ersten Greifer relativ zu dem zweiten Greifer derart zu bewegen, dass der erste Greifer das vorbestimmte Leitungselement an dem ersten Leitungselementendabschnitt oder dem zweiten Leitungselementendabschnitt greift. Vorzugsweise kann der erste Greifer zu dem ersten oder dem zweiten Leitungselementendabschnitt gefahren oder bewegt werden und den ersten oder den zweiten Leitungselementendabschnitt, insbesondere an einer für den ersten Greifer vorbestimmten Greifposition oder Greifpunkt, greifen oder aufnehmen. Mit anderen Worten wird insbesondere durch den ersten Greifer der vorbestimmte Greifpunkt angefahren, um den ersten oder zweiten Leitungselementendabschnitt definiert greifen zu können. Besonders bevorzugt ist der erste Greifer dazu eingerichtet, unterschiedliche Positionen der ersten oder zweiten Leitungselementendabschnitte oder unterschiedliche Schenkelpositionen der Leitungselemente anzufahren.

Besonders bevorzugt ist der erste Greifer und/oder ein erstes Armelement, an dem der erste Greifer angeordnet ist, und/oder die erste Greifeinrichtung linear beweglich angeordnet. Mit anderen Worten ist der erste Greifer und/oder ein erstes Armelement, an dem der erste Greifer angeordnet ist, und/oder die erste Greifeinrichtung dazu eingerichtet, eine Linearbewegung auszuführen. Zum Bewegen des ersten Greifers und/oder des ersten Armelements weist die Greifvorrichtung bevorzugt eine erste Bewegungseinheit auf. Die erste Bewegungseinheit ist dazu eingerichtet, den ersten Greifer und/oder das erste Armelement relativ zu dem Grundkörper und/oder den zweiten Greifer zu bewegen. Mit anderen Worten kann der erste Greifer und/oder das erste Armelement mittels der ersten Bewegungseinheit bewegt werden.

In vorteilhafter Weise umfasst die Greifvorrichtung eine erste Bewegungseinheit, welche dazu eingerichtet ist, den ersten Greifer und/oder ein erstes Armelement, an welchem der erste Greifer angeordnet ist, relativ zu dem Grundkörper und/oder den zweiten Greifer zu bewegen. Mit anderen Worten kann der erste Greifer und/oder das erste Armelement, an welchem der erste Greifer angeordnet ist, der ersten Greifeinrichtung mittels der ersten Bewegungseinheit bewegt werden. Zusätzlich oder alternativ kann die erste Bewegungseinheit dazu eingerichtet sein, den ersten Greifer und/oder das erste Armelement, an welchem der erste Greifer angeordnet ist, insbesondere um eine Drehachse der ersten Greifeinrichtung, zu drehen. Besonders bevorzugt weist das erste Armelement, welches auch als erster Greiferarm oder Greifarm der ersten Greifeinrichtung bezeichnet werden kann, insbesondere in einem unteren Bereich, eine Drehachse auf. Mit anderen Worten weist ein Greiferarm oder erstes Armelement der Greifvorrichtung, insbesondere in einem unteren Bereich oder Endbereich, bevorzugt gegenüber der Grundplatte, eine Drehachse auf. Insbesondere ist der erste Greifer an einem Ende des ersten Armelements angeordnet. Die Drehachse ermöglicht es insbesondere verschiedene Geometrien an Hairpins, besonders bevorzugt unterschiedliche Schenkelabstände, mit der Greifvorrichtung greifen zu können.

Zusätzlich oder alternativ kann es vorgesehen sein, dass der erste Greifer um einen Mittelpunkt des zu greifenden ersten oder zweiten Leitungselementendabschnitts drehbar ist. Mit anderen Worten kann sich der erste Greifer oder die erste Greifeinrichtung oder der erste Greifarm um einen Schenkelmittelpunkt des zu greifenden ersten oder zweiten Leitungselementendabschnitts, also Schenkels des Leitungselements, drehen.

In vorteilhafter Weise umfasst die zweite Greifeinrichtung eine Bewegungseinheit, welche dazu eingerichtet ist, den zweiten Greifer relativ zu dem Grundkörper zu bewegen. Mit anderen Worten kann der zweite Greifer der zweiten Greifeinrichtung mittels der Bewegungseinheit bewegt werden. Die Bewegungseinheit weist bevorzugt ein erstes Zahnrad und ein zweites Zahnrad auf, wobei der zweite Greifer an dem zweiten Zahnrad angeordnet ist. Dabei greift das erste Zahnrad in das zweite Zahnrad ein. Bevorzugt handelt es sich bei dem ersten Zahnrad um das angetriebene Zahnrad, welches auch als Antriebsrad bezeichnet werden kann. Besonders bevorzugt ist das erste Zahnrad als ein außenverzahntes Zahnrad ausgebildet. Bei dem zweiten Zahnrad handelt es sich insbesondere um ein Abtriebsrad oder -zahnrad, welches auch als Abtriebsplatte ausgebildet werden kann. Besonders bevorzugt ist das zweite Zahnrad als ein innenverzahntes Zahnrad ausgebildet. Ferner weist die Bewegungseinheit eine Antriebseinheit auf, welche dazu eingerichtet ist, das erste Zahnrad zum Bewegen des zweiten Zahnrades anzutreiben. Bevorzugt wird das erste Zahnrad durch die Antriebseinheit bewegt oder gedreht oder angetrieben. Die Antriebseinheit kann als ein Motor, insbesondere als ein Schrittmotor, ausgebildet sein. Die Antriebseinheit dreht oder bewegt das erste Zahnrad, welches in das zweite Zahnrad eingreift und damit das zweite Zahnrad bewegt. Besonders bevorzugt greifen die Zähne des ersten Zahnrades in ein Teilstück des zweiten Zahnrades ein. Durch die Umsetzung der Bewegungseinheit mittels zweier Zahnräder ist die Mechanik zum Bewegen des zweiten Greifers besonders einfach und stabil aufgebaut.

Gemäß einer vorteilhaften Weiterbildung ist es vorgesehen, dass die zweite Greifeinrichtung eine Aufnahmeeinheit umfasst, an welcher das zweite Zahnrad angeordnet ist. Die Aufnahmeeinheit kann als ein Träger, wie beispielsweise eine Platte, ausgebildet sein. Insbesondere ist die Aufnahmeeinheit dazu eingerichtet, das zweite Zahnrad aufzunehmen oder zu halten oder zu fixieren oder zu tragen. Ferner umfasst die Aufnahmeeinheit zumindest einen Aufnahmebereich, wobei das zweite Zahnrad zumindest ein Führungselement aufweist, welches in den Aufnahmebereich eingreift. Mit anderen Worten kann an dem zweiten Zahnrad ein Element oder Bauteil oder ein Fortsatz angeordnet sein, welches in dem Aufnahmebereich der Aufnahmeeinheit angeordnet ist. Mit "Aufnahmebereich" ist insbesondere ein Bereich oder ein Abschnitt oder Aufnahme oder ein Ausschnitt der Aufnahmeeinheit gemeint. Insbesondere erstreckt sich das zumindest eine Führungselement senkrecht zu einer Fläche des zweiten Zahnrades. Das zweite Zahnrad kann auch mehrere Führungselemente aufweisen. Ferner gibt der Aufnahmebereich eine Bewegungsbahn des zweiten Greifers vor. Mit anderen Worten kann durch die Anordnung des Führungselements des zweiten Zahnrads in dem Aufnahmebereich der Aufnahmeeinheit die Bewegung des zweiten Greifers eingeschränkt oder vorgegeben werden. Mit anderen Worten wird das zweite Zahnrad oder der zweite Greifer durch die Aufnahme oder das Führungselement in dem Aufnahmebereich geführt. Mithilfe des Zusammenwirkens des Aufnahmebereichs mit dem Führungselement kann auf besonders einfache und zuverlässige Art und Weise eine Bewegung oder Führung des zweiten Greifers eingestellt oder vorgegeben werden.

In vorteilhafter Weise weist der Aufnahmebereich eine kreisbogenförmige Form auf, wobei bei der Bewegung des zweiten Zahnrades das Führungselement derart in dem Aufnahmebereich geführt ist, dass sich der zweite Greifer zumindest teilweise entlang einer Kreisbahn bewegt. Mit "Kreisbahn" ist insbesondere eine Kreislinie, entlang welcher der zweite Greifer zumindest teilweise bewegt wird, gemeint. Mit anderen Worten führt das zumindest eine Führungselement das zweite Zahnrad auf einem definierten Durchmesser in der Aufnahme.

Besonders bevorzugt ist der Aufnahmebereich als eine Nut oder ein Langloch oder eine Rille oder eine Rinne ausgebildet. Insbesondere weist die Nut oder das Langloch oder die Rille oder die Rinne eine kreisbogenförmige Form auf. Das zumindest eine Führungselement kann bevorzugt als ein Fortsatz oder Pin oder ein Stift oder ein Bolzen ausgebildet sein. Dabei ist das Führungselement zumindest teilweise, also vollständig oder teilweise in der Nut oder dem Langloch oder der Rille oder der Rinne angeordnet. Bei der Bewegung des zweiten Zahnrades kann das zweite Zahnrad sich durch die Anordnung des Führungselements in der Nut oder dem Langloch oder der Rille oder der Rinne nur innerhalb der Nut oder des Langlochs oder der Rille oder der Rinne bewegen. Insbesondere ist eine Breite des zumindest einen Führungselements an eine Breite des Aufnahmebereichs angepasst. Bei der Führung des zumindest einen Führungselements in dem Aufnahmebereich, wird das zumindest eine Führungselement bevorzugt entlang einer Länge des Aufnahmebereichs geführt. Dadurch ergibt sich der Vorteil, dass der zweite Greifer ohne eine ungewollte Bewegung, wie beispielsweise ein Schlackern, geführt wird.

Zusätzlich oder alternativ kann die zweite Bewegungseinheit dazu eingerichtet sein, den zweiten Greifer und/oder ein zweites Armelement, an dem der zweite Greifer angeordnet ist, insbesondere um eine Drehachse der zweiten Greifeinrichtung, zu drehen. Besonders bevorzugt weist ein Greiferarm oder zweites Armelement der Greifvorrichtung, insbesondere in einem unteren Bereich oder Endbereich, bevorzugt gegenüber der Grundplatte, eine Drehachse auf. Insbesondere ist der zweite Greifer an einem Ende des zweiten Armelements angeordnet. Die Drehachse ermöglicht es insbesondere verschiedene Geometrien an Hairpins, besonders bevorzugt unterschiedliche Schenkelabstände, mit der Greifvorrichtung greifen zu können.

In vorteilhafter Weise sind der erste Greifer und der zweite Greifer in ihrer Höhe zueinander versetzt angeordnet. Mit anderen Worten können der erste Greifer und der zweite Greifer in die Hochrichtung der Greifvorrichtung unterschiedlich oder versetzt zueinander angeordnet sein. Bevorzugt sind der erste Greifer und der zweite Greifer nicht auf gleicher Höhe angeordnet.

Eine weitere vorteilhafte Ausführungsform sieht vor, dass der Grundkörper eine Grundplatte umfasst, wobei an der Grundplatte ein erstes Armelement und ein zweites Armelement angeordnet sind, wobei sich die beiden Armelemente vertikal zur Grundplatte erstrecken, wobei die erste Greifeinrichtung an dem ersten Armelement und die zweite Greifeinrichtung an dem zweiten Armelement angeordnet sind. Mit "Grundplatte" ist insbesondere ein plattenförmiges Werkstück gemeint. Dabei ist das erste Armelement an einem Ende oder Endbereich an einer Fläche der Grundplatte und das zweite Armelement an einem gegenüberliegenden Ende oder Endbereich an der Fläche der Grundplatte, insbesondere parallel zu dem ersten Armelement, an der Grundplatte angeordnet. Mit anderen Worten sind das erste Armelement und das zweite Armelement in einem vorbestimmten Abstand, insbesondere parallel zueinander, an der Grundplatte angeordnet oder fixiert. Das erste Armelement und das zweite Armelement können beispielsweise als eine Stange oder eine Schiene oder ein Stab ausgebildet sein. Insbesondere erstrecken sich das erste Armelement und das zweite Armelement senkrecht zu einer Fläche oder Seite der Grundplatte.

In vorteilhafter Weise weisen der erste Greifer und der zweite Greifer jeweils zwei Greifbacken auf, wobei eine jeweilige Greiffläche der jeweiligen Greifbacken konkav ausgebildet ist. Mit anderen Worten können die jeweiligen Greifflächen der Greifbacken rund, insbesondere nach innen gewölbt, ausgeführt sein. Beispielsweise sind der erste Greifer und/oder der zweite Greifer als Parallelgreifer ausgebildet. Bevorzugt kann eine Form der Greifbacken oder Greifflächen auch an eine Form des Leitungselements, insbesondere des Leitungselementendabschnitts, angepasst sein. Durch die runde Ausbildung der Greifbacken kann das Leitungselement beziehungsweise der jeweilige Leitungselementendabschnitt sicher und zuverlässig zwischen den Greifbacken gehalten werden.

Insbesondere schließen der erste Greifer und/oder der zweite Greifer und klemmen das Leitungselement zwischen ihren Greifbacken, welche auch als Klemmbacken bezeichnet werden können, ein. Dadurch wird das Leitungselement insbesondere an seinen beiden voneinander entfernten Leitungselementendabschnitten oder an einem Leitungselementendabschnitt festgehalten.

Eine weitere vorteilhafte Ausführungsform sieht vor, dass der Grundkörper an eine Transporteinrichtung zum Bewegen der Greifvorrichtung anlenkbar ist. Bei der Transporteinrichtung kann es sich beispielsweise um einen Roboter handeln. Mit anderen Worten kann der Grundkörper oder die Greifvorrichtung beispielsweise an einem Roboter verbaut sein.

Zu der Erfindung gehört auch eine Hairpin-Handhabungsvorrichtung zum Handhaben von Hairpins zur Herstellung einer Spulenwicklung eines Bauteils einer elektrischen Maschine, welche die erfindungsgemäße Greifvorrichtung und/oder eine Transporteinrichtung zum Bewegen der Greifvorrichtung umfasst. Zu der Erfindung gehört auch eine Steuerung der Hairpin-Handhabungsvorrichtung und/oder der Greifvorrichtung und/oder der Transporteinrichtung. Gemäß einem weiteren Aspekt der Erfindung wird ein Computerprogramm geschaffen, das Programmschritte zur Steuerung der erfindungsgemäßen Greifvorrichtung und/oder Programmschritte zur Steuerung eines erfindungsgemäßen Verfahrens und/oder Programmschritte zur Steuerung einer erfindungsgemäßen Hairpin-Handhabungsvorrichtung und/oder Programmschritte zur Steuerung einer erfindungsgemäßen Transporteinrichtung zum Bewegen der Greifvorrichtung umfasst.

Schließlich gehört zu der Erfindung auch ein Verfahren zum Greifen zumindest eines Leitungselements mittels einer Greifvorrichtung, wobei die Greifvorrichtung einen Grundkörper, eine erste Greifeinrichtung, welche einen ersten Greifer umfasst, und eine zweite Greifeinrichtung aufweist, welche einen zweiten Greifer umfasst, welcher relativ zu dem Grundkörper beweglich angeordnet ist. Bei dem Verfahren wird in einem Verfahrensschritt ein erster Leitungselementendabschnitt oder ein zweiter Leitungselementendabschnitt jedes vorbestimmten Leitungselements mittels des ersten Greifers der ersten Greifeinrichtung an einer vorbestimmten Position gegriffen. Mit anderen Worten kann in einem Verfahrensschritt ein jeweiliges Leitungselement einzeln an dem ersten Leitungselementendabschnitt oder dem zweiten Leitungselementendabschnitt durch den ersten Greifer gegriffen werden. In einem weiteren Verfahrensschritt wird der zweite Greifer relativ zu dem ersten Greifer oder dem Grundkörper zur Anpassung an eine Position des zweiten Leitungselementendabschnitts des vorbestimmten Leitungselements oder der ersten Leitungselementendabschnitts des vorbestimmten Leitungselements bewegt. Des Weiteren wird der zweite Leitungselementendabschnitt des Leitungselements oder der erste Leitungselementendabschnitt des Leitungselements mittels des zweiten Greifers gegriffen.

Dabei ist die Reihenfolge der Verfahrensschritte grundsätzlich variabel. Insbesondere kann der zweite Greifer bereits vor dem Greifen des ersten Leitungselementendabschnitts relativ zu dem ersten Greifer zur Anpassung an eine Position eines zweiten Leitungselementendabschnitt des vorbestimmten Leitungselements bewegt werden. Auch können beide Leitungselementendabschnitte gleichzeitig gegriffen werden, insbesondere nach vorheriger Ausrichtung des zweiten Greifers.

Dabei kann beispielsweise die Steuerung der Greifvorrichtung beispielsweise von einer Zuführvorrichtung zur Zuführung der Leitungselemente zu der Greifvorrichtung Informationen über die konkrete Geometrie eines jeweils zu greifenden Leitungselements, beispielsweise den Abstand der beiden Leitungselementabschnitte sowie seine Lage auf der Zuführvorrichtung erhalten. Die Steuerung richtet dann die Greifvorrichtung derart relativ zum zu greifenden Leitungselement aus und positioniert den zweiten Greifer derart relativ zum ersten Greifer, dass im Anschluss daran der erste Leitungselementabschnitt durch den ersten Greifer und der zweite Leitungselementabschnitt durch den zweiten Greifer gleichzeitig gegriffen werden können.

Eine vorteilhafte Ausführungsform sieht vor, dass der zweite Greifer zum Greifen des zweiten Leitungselementendabschnitts oder des ersten Leitungselementendabschnitts des vorbestimmten Leitungselements entlang einer vorbestimmten Kreisbahn zu dem zweiten Leitungselementendabschnitt oder dem ersten Leitungselementendabschnitt bewegt wird. Mit anderen Worten wird der zweite Greifer auf einem definierten Durchmesser geführt.

Eine weitere vorteilhafte Ausführungsform sieht vor, dass mit der Greifvorrichtung zeitlich nacheinander die Leitungselemente gegriffen werden, wobei vor dem Greifen des jeweiligen Leitungselementendabschnitts das Leitungselement um eine Schenkelachse eines der beiden Leitungselementendabschnitte des Leitungselements gedreht wird, sodass der andere Leitungselementendabschnitt auf einer Kreisbahn angeordnet ist. Mit "Schenkelachse" ist insbesondere eine Achse gemeint, um welche das jeweilige Leitungselement gedreht oder rotiert wird. Insbesondere weist einer der beiden Leitungselementendabschnitte die Schenkelachse auf. Besonders bevorzugt werden die Leitungselementendabschnitte oder Schenkel der Leitungselemente, insbesondere zeitlich, nacheinander deckungsgleich übereinandergelegt und anschließend alle Leitungselemente, insbesondere einzeln, um eine, insbesondere gleiche, Schenkelachse eines der beiden Leitungselementendabschnitte oder Schenkel gedreht, sodass sich an den anderen Leitungselementendabschnitten oder Schenkeln ein gemeinsamer Durchmesser ergibt. Mit anderen Worten werden bevorzugt alle zu greifenden Leitungselemente um die, insbesondere gleiche, Schenkelachse gedreht, damit die Leitungselemente so ausgerichtet werden, dass sich deren andere Schenkel, um welchen das Leitungselement insbesondere nicht gedreht wird, auf einem gemeinsamen Durchmesser oder einer gemeinsamen Kreisbahn oder -linie oder -radius befinden. Bevorzugt werden die jeweiligen Leitungselemente um eine Schenkelachse des ersten Leitungselementendabschnitts gedreht, sodass die zweiten Leitungselementendabschnitte oder Schenkeln auf einer gemeinsamen Kreislinie angeordnet sind oder liegen.

In einer besonders bevorzugten Ausführungsform werden mit der Greifvorrichtung zeitlich nacheinander mehrere Leitungselemente gegriffen, wobei vor dem Greifen des jeweiligen Leitungselements die Greifvorrichtung derart relativ zu dem jeweils zu greifenden Leitungselement ausgerichtet und der zweite Greifer derart relativ zu dem ersten Greifer bewegt wird, dass der erste und der zweite Leitungselementabschnitt des Leitungselements gleichzeitig jeweils durch den ersten und den zweiten Greifer gegriffen werden können.

Dabei erhält beispielsweise die Steuerung der Greifvorrichtung beispielsweise von einer Zuführvorrichtung zur Zuführung der Leitungselemente zu der Greifvorrichtung Informationen über die konkrete Geometrie eines jeweils zu greifenden Leitungselements, beispielsweise den Abstand der beiden Leitungselementabschnitte sowie seine Lage auf der Zuführvorrichtung. Die Steuerung richtet dann die Greifvorrichtung derart relativ zum zu greifenden Leitungselement aus und positioniert den zweiten Greifer derart relativ zum ersten Greifer, dass im Anschluss daran der erste Leitungselementabschnitt durch den ersten Greifer und der zweite Leitungselementabschnitt durch den zweiten Greifer gleichzeitig gegriffen werden können.

In vorteilhafter Weise wird nach dem Greifen des vorbestimmten Leitungselements das Leitungselement, insbesondere in ein Adapternest, mittels der Greifvorrichtung vorgesteckt. Das Adapternest kann auch als ein Vorstecknest bezeichnet werden. Besonders bevorzugt werden zeitlich nacheinander mehrere Leitungselemente zu einem Kranz vorgesteckt werden.

In vorteilhafter Weise werden zum Vorstecken die erste Greifeinrichtung und die zweite Greifeinrichtung positioniert, sodass der erste Greifer innerhalb einer Kreisbahn der Anordnung und der zweite Greifer außerhalb der Kreisbahn oder der erste Greifer außerhalb der Kreisbahn und der zweite Greifer innerhalb der Kreisbahn oder der erste Greifer außerhalb der Kreisbahn und der zweite Greifer außerhalb der Kreisbahn oder der erste Greifer innerhalb der Kreisbahn und der zweite Greifer innerhalb der Kreisbahn angeordnet werden.

Zu Ausgestaltungen der Erfindung gehören auch Weiterbildungen der Greifvorrichtung, der Hairpin-Handhabungsvorrichtung, der erfindungsgemäßen Transporteinrichtung und des erfindungsgemäßen Verfahrens, die Merkmale aufweisen, wie sie bereits im Zusammenhang mit den Weiterbildungen der erfindungsgemäßen Greifvorrichtung und des erfindungsgemäßen Verfahrens beschrieben worden sind. Aus diesem Grund sind die entsprechenden Weiterbildungen der erfindungsgemäßen Hairpin-Handhabungsvorrichtung, der erfindungsgemäßen Transporteinrichtung und des erfindungsgemäßen Verfahrens hier nicht noch einmal beschrieben.

Ein Ausführungsbeispiel wird im Folgenden anhand der beigefügten Zeichnungen näher erläutert. Darin zeigt:
- Fig. 1a: eine schematische Darstellung einer Anordnung mehrerer Leitungselemente eines Stators mit zwei Kränzen in einer Seitenansicht;
- Fig. 1b: eine schematische Darstellung einer Anordnung mehrerer Leitungselemente eines Stators mit zwei Kränzen in einer Draufsicht;
- Fig. 1c: eine schematische Darstellung einer Anordnung mehrerer Leitungselemente eines Stators mit zwei Kränzen in einer Ansicht von unten;
- Fig. 2a: eine schematische Darstellung einer weiteren Anordnung mehrerer Leitungselemente eines Stators mit zwei Kränzen in einer Seitenansicht;
- Fig. 2b: eine schematische Darstellung einer weiteren Anordnung mehrerer Leitungselemente eines Stators mit zwei Kränzen in einer Draufsicht;
- Fig. 2c: eine schematische Darstellung einer weiteren Anordnung mehrerer Leitungselemente eines Stators mit zwei Kränzen in einer Ansicht von unten;
- Fig. 3: eine schematische Darstellung einer Greifvorrichtung mit einem Grundkörper, einer ersten Greifeinrichtung, welche einen ersten Greifer umfasst, und einer zweiten Greifeinrichtung, welche einen zweiten Greifer und eine Bewegungseinheit zum Bewegen des zweiten Greifers umfasst, in einer Perspektivansicht;
- Fig. 4: eine schematische Darstellung der Greifvorrichtung mit dem Grundkörper, der ersten Greifeinrichtung, welche den ersten Greifer umfasst, und der zweiten Greifeinrichtung, welche den zweiten Greifer und die Bewegungseinheit zum Bewegen des zweiten Greifers umfasst, in einer weiteren Perspektivansicht;
- Fig. 5: eine schematische Darstellung der Greifvorrichtung von Fig. 4 in einer Ansicht von unten;
- Fig. 6: eine schematische Darstellung eines Greifers mit zwei Greifbacken;
- Fig. 7: eine schematische Darstellung der Greifvorrichtung von Fig. 4 in einer Ansicht von unten mit sichtbarer Bewegungseinheit;
- Fig. 8: eine schematische Darstellung des zweiten Greifers mit sichtbarer Bewegungseinheit, welche ein erstes Zahnrad und ein zweites Zahnrad umfasst;
- Fig. 9: eine schematische Darstellung der Greifvorrichtung bei dem Greifen eines ersten Leitungselements in einer Perspektivansicht;
- Fig. 10: eine schematische Darstellung der Greifvorrichtung bei dem Greifen eines zweiten Leitungselements in einer Perspektivansicht;
- Fig. 11: eine schematische Darstellung der Greifvorrichtung bei dem Greifen eines dritten Leitungselements in einer Perspektivansicht;
- Fig. 12: eine schematische Darstellung der Greifvorrichtung bei dem Greifen eines vierten Leitungselements in einer Perspektivansicht;
- Fig. 13: eine schematische Darstellung der Greifvorrichtung bei dem Greifen eines fünften Leitungselements in einer Perspektivansicht;
- Fig. 14: eine schematische Darstellung der Greifvorrichtung beim Vorstecken der einzelnen Leitungselemente in ein Vorstecknest; und
- Fig. 15: eine schematische Darstellung der Greifvorrichtung mit Positionsmöglichkeiten des ersten Greifers und des zweiten Greifers;
- Fig. 16: eine schematische Darstellung einer Greifvorrichtung mit einem Grundkörper, einer alternativen ersten Greifeinrichtung, welche einen ersten Greifer umfasst, und einer alternativen zweiten Greifeinrichtung, welche einen zweiten Greifer und eine Bewegungseinheit zum Bewegen des zweiten Greifers umfasst, beim Greifen eines Leitungselements von einer Seite in einer Perspektivansicht;
- Fig. 17: eine schematische Darstellung der Greifvorrichtung von Fig. 16 beim Greifen des Leitungselements von gegenüberliegenden Seiten in einer Perspektivansicht;
- Fig. 18: eine schematische Darstellung der Greifvorrichtung von Fig. 16 in einer Ansicht von unten auf den ersten Greifer und den zweiten Greifer;
- Fig. 19: eine schematische Darstellung der Greifvorrichtung von Fig. 17 in einer Ansicht von unten auf den ersten Greifer und den zweiten Greifer;
- Fig. 20: eine schematische Darstellung von vier Greifpositionen des ersten Greifers und/oder zweiten Greifers; und
- Fig. 21: eine schematische Darstellung einer weiteren Ausführungsform des ersten Greifers als Doppelgreifer.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

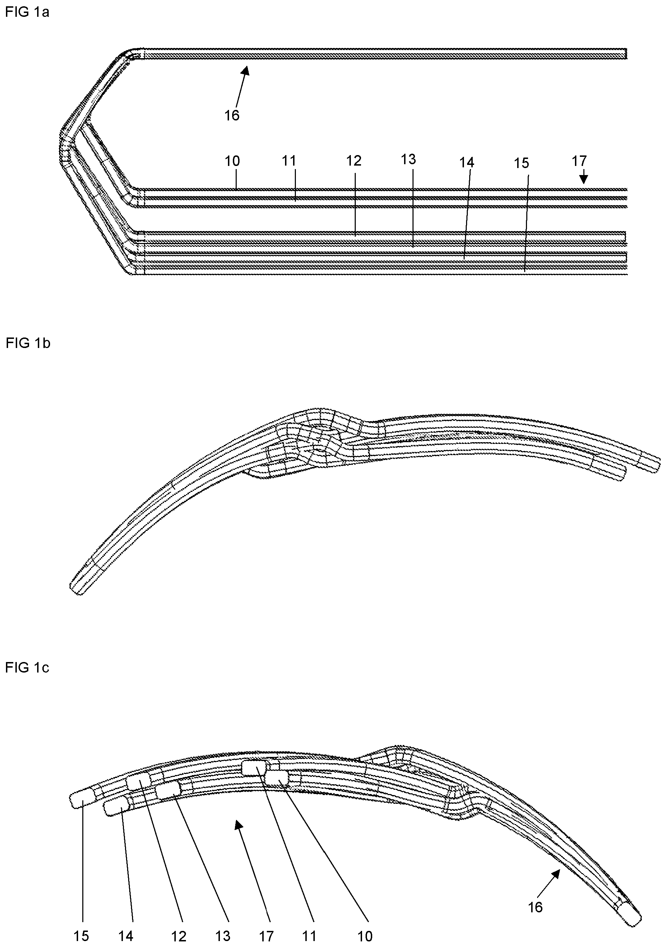

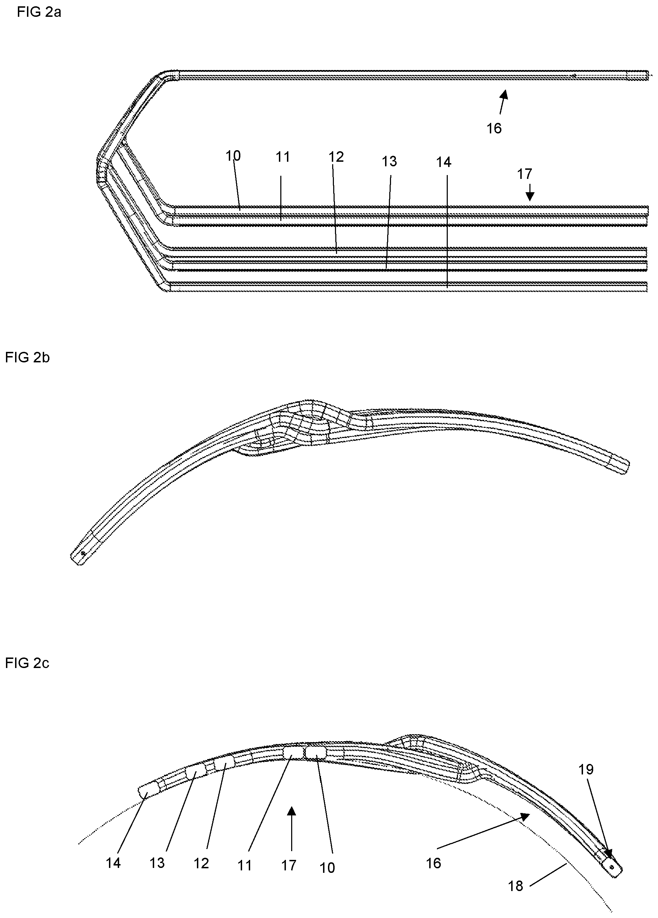

In den Figuren Fig. 1a bis Fig. 1c und Fig. 2a bis Fig. 2c sind mehrere Leitungselemente, insbesondere für einen Stator einer elektrischen Maschine, in verschiedenen Ansichten - in einer Seitenansicht, Draufsicht und von unten - dargestellt. Die Leitungselemente sind als elektrische Leiter, nämlich als Hairpins, ausgebildet. Die Figuren Fig. 1a bis Fig. 1c zeigen sechs Leitungselemente - einen erstes Leitungselement 10, ein zweites Leitungselement 11, ein drittes Leistungselement 12, ein viertes Leitungselement 13, ein fünftes Leitungselement 14 und ein sechstes Leitungselement 15 - und Fig. 2a bis Fig. 2c zeigen fünf - das erste bis fünfte Leitungselement 10 bis 14 - Leitungselemente. In den Figuren Fig. 1a bis Fig. 1c und Fig. 2a bis Fig. 2c sind die jeweiligen Leitungselemente zwar zusammen gezeigt, um die unterschiedlichen Ausbildungen der Leitungselemente zu verdeutlich, zum Greifen werden aber die einzelnen Leitungselemente zeitlich nacheinander auf der vorbestimmten oder vorgegebenen Position angeordnet und dort einzeln durch eine Greifvorrichtung gegriffen. Die einzelnen Leitungselemente werden der Greifvorrichtung, nachdem sie in einer Herstellvorrichtung und/oder Biegevorrichtung hergestellt wurden, über ein Transportsystem einzeln zur Verfügung gestellt und dann einzeln gegriffen.

Im Folgenden soll genauer auf die Form der einzelnen Leitungselemente eingegangen werden. Die Leitungselemente weisen eine 3-dimensionale Form oder eine 3-D Form auf. Die Leitungselemente sind U-förmig gebogen ausgebildet. Die Leitungselemente weisen mehrere Winkel auf, aus denen sich eine Dachform ergibt, die auch als Hausdachform bezeichnet wird. Dabei können die Winkel und Schenkellängen des Leitungselements je nach der erforderlichen Form variieren. Die Leitungselemente sind in ihrem Dachbereich in eine Richtung gebogen, die senkrecht zur Ebene des Leitungselements verläuft, sodass eine Krümmung im Dachbereich geformt ist. Zu weiteren Einzelheiten hinsichtlich der Form der jeweiligen Leitungselemente wird an dieser Stelle auf das Dokument [1] verwiesen.

Die jeweiligen Leitungselemente weisen zwei Leitungselementendabschnitte - einen ersten Leitungselementendabschnitt 16 und einen zweiten Leitungselementendabschnitt 17 - auf. Der Leitungselementendabschnitt kann auch als Schenkelende bezeichnet werden. In den Figuren Fig. 1a bis Fig. 1c und Fig. 2a bis Fig. 2c weisen die jeweiligen Leitungselemente einen rechteckigen Querschnitt oder eine rechteckige Querschnittsform auf. Alternativ können die Leitungselemente auch einen runden oder ovalen oder quadratischen oder mehreckigen Querschnitt aufweisen.

In den Figuren Fig. 1a bis Fig. 1c und Fig. 2a bis Fig. 2c sind zwar mehrere Leitungselemente gleichzeitig dargestellt, doch die Darstellungen in den Figuren Fig. 1a bis Fig. 1c und Fig. 2a bis Fig. 2c soll verdeutlichen, wie die einzelnen Leitungselemente zeitlich nacheinander zum Greifen mit einer Greifvorrichtung angeordnet werden. Die dargestellten Leitungselemente sind an einem der beiden Leitungselementendabschnitte, in diesem Fall dem ersten Leitungselementendabschnitt 16, deckungsgleich übereinandergelegt dargestellt, um die gleiche Aufnahmeposition für die ersten Leitungselementendabschnitte 16 zu verdeutlichen. Die anderen Leitungselementendabschnitte, in diesem Fall die zweiten Leitungselementendabschnitte 17, weisen voneinander verschiedene Positionen auf. Im Vergleich der Figuren Fig. 1a bis Fig. 1c zu den Figuren Fig. 2a bis Fig. 2c sind die zweiten Leitungselementendabschnitte 17 in den Figuren Fig. 2a bis Fig. 2c auf einer Kreislinie 18, insbesondere nebeneinander, angeordnet. In den Figuren Fig. 1a bis Fig. 1c ergeben sich an den zweiten Leitungselementendabschnitten sechs Positionen, insbesondere Greifpositionen, die jeweils in x- als auch in y-Richtung voneinander abweichen.

Um eine derartige Anordnung der zweiten Leitungselementendabschnitte 17, wie sie in den Figuren Fig. 2a bis Fig. 2c gezeigt ist, zu erreichen, werden die jeweiligen Leitungselemente um eine Schenkelachse 19, insbesondere des ersten Leitungselementendabschnitt 16, gedreht. Mit "Schenkelachse" ist insbesondere eine Achse gemeint, um welche das jeweilige Leitungselement gedreht oder rotiert wird. Insbesondere weist einer der beiden Leitungselementendabschnitte die Schenkelachse auf. Dabei werden also zeitlich nacheinander die ersten Leitungselementendabschnitte 16 der jeweiligen Leitungselemente deckungsgleich übereinandergelegt und anschließend einzeln um die Schenkelachse 19 des ersten Leitungselementendabschnitts 16 gedreht, sodass sich an den zweiten Leitungselementendabschnitten 17 ein gemeinsamer Durchmesser ergibt oder sich die zweiten Leitungselementendabschnitte 17 auf einer gemeinsamen Kreisbahn oder -linie oder -radius befinden. In der praktischen Anwendung wird die Greifvorrichtung 20 durch Bewegung der Transportvorrichtung, beispielsweise eines Roboters, an dem die Greifvorrichtung20 befestigt ist, derart relativ zu den zu greifenden Leitungselementen positioniert, dass relativ zu der Greifvorrichtung 20 sich die zweiten Leitungselementendabschnitte 17 auf einer gemeinsamen Kreisbahn oder -linie oder -radius befinden.

Die Ausrichtung der jeweiligen Leitungselemente, wie sie in den Figuren Fig. 2a bis Fig. 2c gezeigt ist, bildet die Ausgangslage zum Greifen der jeweiligen Leitungselemente für die Greifvorrichtung, auf welche im Folgenden noch genauer eingegangen wird.

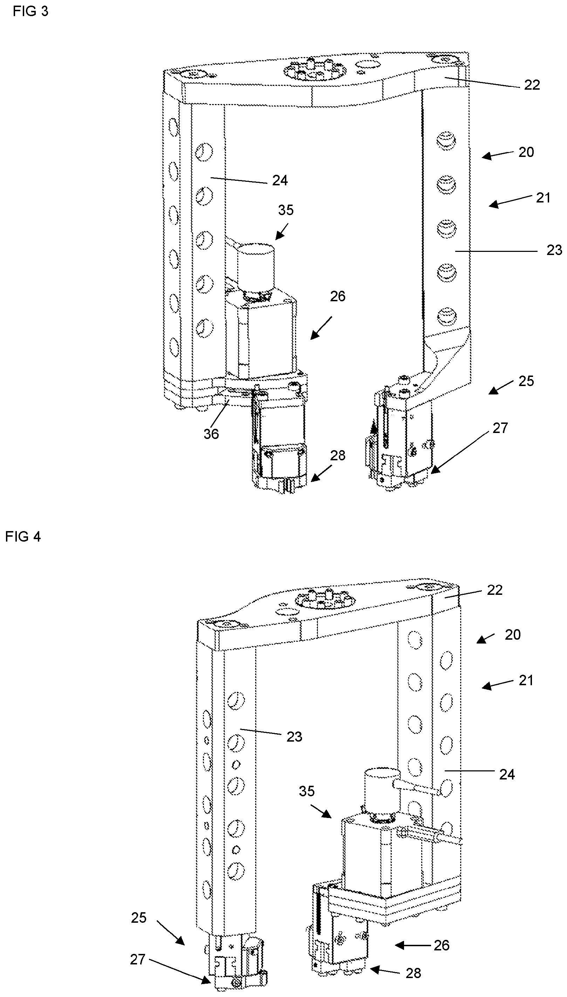

Die Greifvorrichtung 20 zum Greifen der einzelnen Leitungselemente ist in den Figuren Fig. 3 und Fig. 4 in einer Perspektivansicht dargestellt. Die Greifvorrichtung 20 kann beispielsweise an einem Roboter verbaut sein. Die Greifvorrichtung 20 umfasst einen Grundkörper 21, welcher eine Grundplatte 22, ein erstes Armelement 23 und ein zweites Armelement 24 aufweist. Ferner umfasst die Greifvorrichtung 20 eine erste Greifeinrichtung 25 und eine zweite Greifeinrichtung 26. Die Grundplatte 22 ist als ein plattenförmiges Werkstück oder als eine Platte ausgebildet. An die Grundplatte 22 sind an einer Fläche an einem Endbereich der Grundplatte 22 das erste Armelement 23 und an einem gegenüberliegenden Endbereich an der Fläche der Grundplatte 22 das zweite Armelement 24 angeordnet. Mit anderen Worten sind das erste Armelement 23 und das zweite Armelement 24 an der Grundplatte 22 einander gegenüberliegend, insbesondere parallel zueinander, angeordnet. Dabei sind das erste Armelement 23 und das zweite Armelement 24 an der Grundplatte fixiert, insbesondere mit oder an dieser verschraubt, oder form- oder stoffschlüssig verbunden. Hierbei erstrecken sich die beiden Armelemente - erstes Armelement 23 und zweites Armelement 24 - senkrecht oder vertikal zu der Grundplatte 22. Die beiden Armelemente 23 ,24 können als Stange oder Stab oder Schiene ausgebildet sein.

An dem ersten Armelement 23 ist die erste Greifeinrichtung 25 angeordnet oder daran fixiert. Mit anderen Worten hält oder lagert das erste Armelement 23 die erste Greifeinrichtung. Dabei ist das erste Armelement 23 mit einem Ende an der Grundplatte 22 angeordnet oder befestigt. An einem dem einen Ende gegenüberliegenden Ende des ersten Armelements 23 oder gegenüber der Grundplatte 22 ist die erste Greifeinrichtung 25 angeordnet. Mit anderen Worten ist das erste Armelement 23 zwischen der Grundplatte 22 und der ersten Greifeinrichtung 25 angeordnet. Ferner ist das zweite Armelement 24 mit einem Ende an der Grundplatte 22 angeordnet oder befestigt. An einem den einen Ende gegenüberliegenden Ende des zweiten Armelements 24 oder gegenüber der Grundplatte 22 ist die zweite Greifeinrichtung 26 angeordnet oder befestigt. Mit anderen Worten ist das zweite Armelement 24 zwischen der Grundplatte 22 und der zweiten Greifeinrichtung 24 angeordnet. Mit anderen Worten umfasst die Greifvorrichtung 20 die Grundplatte 22, an der zwei Arme oder Armelemente 23, 24 verschraubt sind. An jedem dieser Arme ist eine Greifeinrichtung 25, 26 verbaut, die je einen der beiden Leitungselementendabschnitte 16, 17 greifen soll.

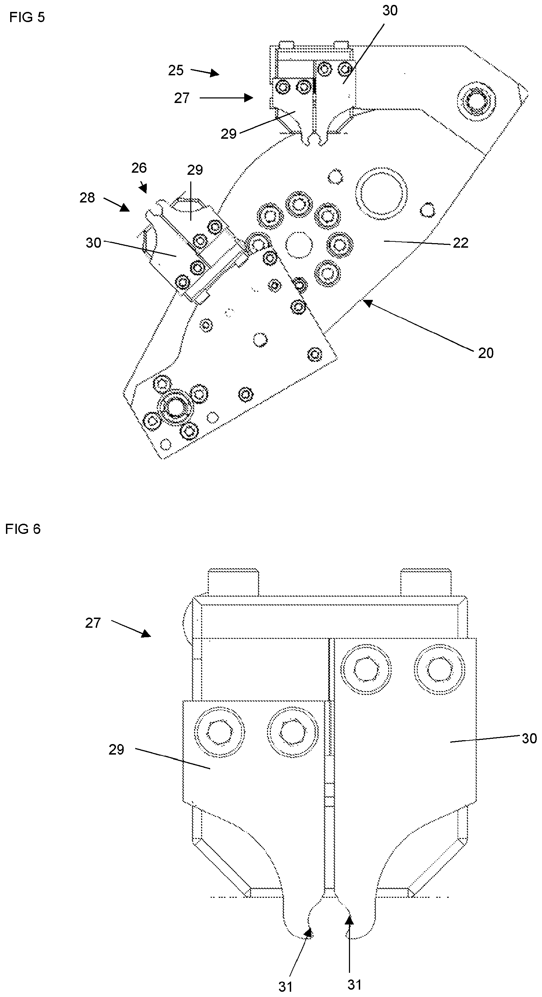

In Fig. 5 ist die Greifvorrichtung 20 in einer Perspektivansicht von unten dargestellt. Wie aus Fig. 5 ersichtlich, weist die erste Greifeinrichtung 25 einen ersten Greifer 27 und die zweite Greifeinrichtung 26 einen zweiten Greifer 28 auf. In Fig. 6 ist einer der beiden Greifer näher dargestellt. Die beiden Greifer - erster Greifer 27 und zweiter Greifer 28 - weisen jeweils zwei Greifbacken - eine erste Greifbacke 29 und eine zweite Greifbacke 30 auf. Bevorzugt sind die beiden Greifbacken 29, 30 des ersten Greifers 27 und des zweiten Greifers 28 analog oder identisch ausgebildet. Beide Greifbacken 29, 30 weisen jeweils eine Greiffläche 31 auf. Dabei ist die Greiffläche 31 der Greifbacken 29, 30 nach innen gewölbt oder konkav ausgebildet. Der erste Greifer 27 ist dazu eingerichtet, insbesondere mit seinen Greifbacken, das Leitungselement an dem ersten Leitungselementendabschnitt 16 zugreifen. Der zweite Greifer 28 ist dazu eingerichtet, insbesondere mit seinen Greifbacken, das Leitungselement an dem zweiten Leitungselementendabschnitt 17 zugreifen. Hierbei umfasst die Greiffläche 31 der jeweiligen Greifer 27, 28 den Leitungselementendabschnitt. Beispielsweise sind der erste Greifer 27 und der zweite Greifer 28 als Parallelgreifer ausgebildet.

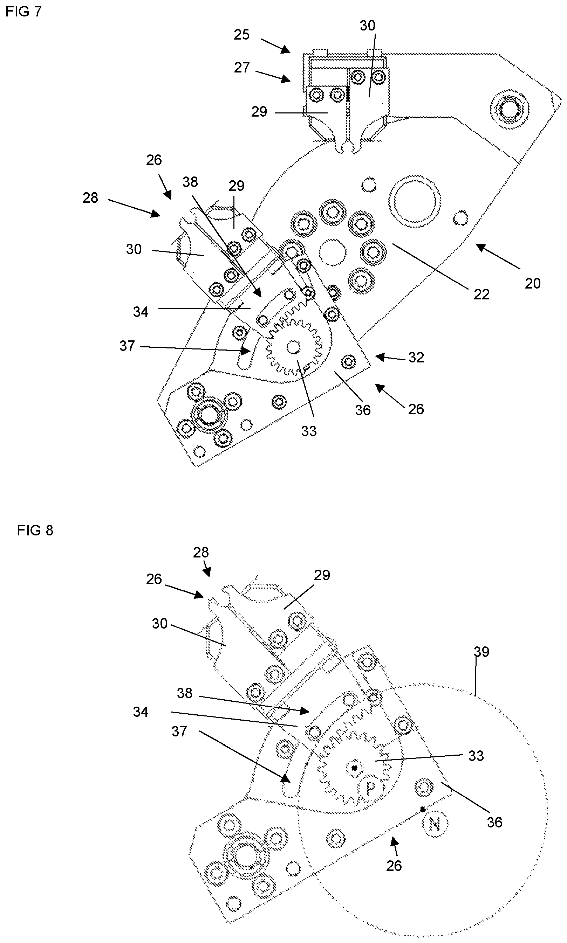

Ferner ist der erste Greifer 27 oder die erste Greifeinrichtung 25 stationär ausgebildet. Hierbei ist der erste Greifer 27 an dem ersten Armelement 23 befestigt. Der zweite Greifer 28 ist beweglich ausgebildet. Zum Bewegen des zweiten Greifers 28 weist die zweite Greifeinrichtung 26 eine Bewegungseinheit 32 auf. Der zweite Greifer 27 ist relativ zu der Grundplatte 22 oder dem Grundkörper 21 und/oder dem ersten Greifer 27 oder der ersten Greifeinrichtung 25 beweglich. Im Zusammenhang mit den Figuren Fig. 7 und Fig. 8 soll die Bewegungseinheit 32 zum Bewegen des zweiten Greifers 28 näher erläutert werden.

Die Bewegungseinheit 32 weist ein erstes Zahnrad 33, ein zweites Zahnrad 34 und eine Antriebseinheit 35 (in Figuren Fig. 7 und Fig. 8 nicht gezeigt) auf. Das erste Zahnrad 33 ist als ein außen verzahntes Zahnrad ausgebildet. Das zweite Zahnrad 34 ist als ein innenverzahntes Zahnrad ausgebildet. Dabei greift das erste Zahnrad 33 in das zweite Zahnrad 34 ein. Das erste Zahnrad 33 wird durch die Antriebseinheit 35 angetrieben. Die Antriebseinheit 35 ist also dazu eingerichtet, das erste Zahnrad 33 anzutreiben, also in eine Drehbewegung zu versetzen. Bei der Antriebseinheit 35 kann es sich beispielsweise um einen Schrittmotor handeln. Das erste Zahnrad 33 kann auch als Antriebsrad oder Antriebszahnrad bezeichnet werden. Das zweite Zahnrad 34 wird durch das erste Zahnrad 33 angetrieben, also in Bewegung versetzt. Damit kann das zweite Zahnrad 34 auch als Abtriebszahnrad oder Abtriebsrad oder Abtriebsplatte bezeichnet werden. Wie in Fig. 7 und 8 ersichtlich, weist das zweite Zahnrad 34 keine runde oder radförmige Form auf, sondern stellt ein Zahnsegment dar. Das zweite Zahnrad 34 ist als plattenförmiges Werkstück oder Platte mit Zähnen, in welche die Zähne des ersten Zahnrades 33 eingreifen, ausgebildet. Ferner ist der zweite Greifer 28 an dem zweiten Zahnrad 34 angeordnet oder daran befestigt. Durch die Bewegung des zweiten Zahnrades 34 wird der zweite Greifer 28 daher automatisch mitbewegt.

Des Weiteren weist die zweite Greifeinrichtung 26 eine Aufnahmeeinheit 36 auf, an welcher das zweite Zahnrad 34 angeordnet oder gelagert ist. Die Aufnahmeeinheit 36 kann als ein Träger ausgebildet sein. Die Aufnahmeeinheit 36 ist als ein plattenförmiges Bauteil oder Werkstück oder als Platte ausgebildet. Ferner umfasst die Aufnahmeeinheit 36 zumindest einen Aufnahmebereich 37. Die Aufnahmeeinheit 36 kann auch mehrere Aufnahmebereiche aufweisen. Der Aufnahmebereich 37 ist als eine Nut oder ein Langloch oder eine Rille ausgebildet. Der Aufnahmebereich 37 weist eine kreislinienförmige oder abgerundete oder halbkreisrunde Form auf. Ferner weist das zweite Zahnrad 34 zumindest ein Führungselement 38 auf. Mit anderen Worten ist an dem zweite Zahnrad 34 zumindest ein Führungselement 38 angeordnet. An dem zweiten Zahnrad 34 können auch mehrere Führungselemente angeordnet sein. Das Führungselement 38 kann beispielsweise als ein Bolzen oder ein Stift oder als ein Fortsatz ausgebildet sein. Dabei greift das zumindest eine Führungselement 38 in den Aufnahmebereich 37 ein. Mit anderen Worten ist das Führungselement zumindest teilweise, also vollständig oder teilweise in dem Aufnahmebereich 37 angeordnet. Durch das in dem Aufnahmebereich 37 angeordnete Führungselement 38 wird dem zweiten Greifer 28 eine Bewegungsbahn vorgegeben.

Bei der Bewegung des zweiten Zahnrades 34 ist das Führungselement 38 derart in dem Aufnahmebereich 37 geführt, dass sich der zweite Greifer 28 zumindest teilweise entlang einer Kreisbahn 39 bewegt. Mit "Kreisbahn" ist insbesondere eine Kreislinie, entlang welcher der zweite Greifer zumindest teilweise bewegt wird, gemeint.

Im Folgenden soll ein konkretes Ausgangsbeispiel beschrieben werden:
Die Mechanik der zweiten Greifeinrichtung 26 umfasst das angetriebene Zahnrad 33, welches durch einen Schrittmotor betrieben wird. Die Zähne des außenverzahnten, angetriebenen Zahnrades 33, welches auch als Antriebsrad bezeichnet werden kann, greifen in ein Teilstück eines innen verzahnten Zahnrades 34, welches auch als Abtriebsplatte bezeichnet werden kann, welches das abgetriebene Zahnrad darstellt. Auf der Abtriebsplatte sind ein oder mehrere Führungselemente angebracht. Die Führungselemente führen die Abtriebsplatte auf einem definierten Durchmesser in dem Aufnahmebereich 37 oder der Aufnahme. In der Aufnahme sind Aufnahmen für die Führungselemente vorgesehen. An der Abtriebsplatte ist der zweite Greifer 28 mit seinen Greifbacken 29, 30 montiert. Treibt die Antriebseinheit 35, also der Schrittmotor, das Antriebsrad 33 an, wird der zweite Greifer 28 dadurch auf der durch die Führungselemente 38 und der Aufnahme 37 definierten Durchmesserbahn oder Kreisbahn bewegt. Der Vorteil der Zahnübersetzung ist, dass ein Drehpunkt N des zweiten Zahnrades 34 oder der Abtriebsplatte und somit ein Drehpunkt des zweiten Greifers 28 nicht deckungsgleich mit dem Mittelpunkt P des Antriebs sein muss. Dies führt zu einem kompakten System, das erforderlich ist, da innerhalb des Adapternests sehr wenig Platz ist. Des Weiteren bringt die Zahnradübersetzung auch eine vorteilhafte Kraftübersetzung mit sich.

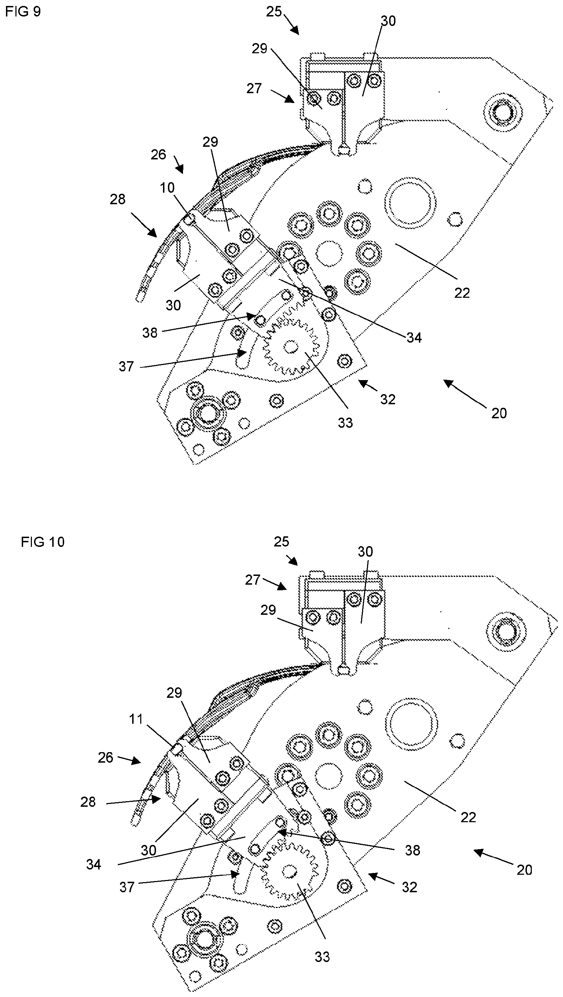

In den Figuren Fig. 9 bis Fig. 13 ist nacheinander das Greifen der fünf Leitungselemente - erstes Leitungselement 11, zweites Leitungselement 12, drittes Leitungselement 13, viertes Leitungselement 14 und fünftes Leitungselement 15 - wie es in den Figuren Fig. 2a bis Fig. 2c gezeigt ist, gezeigt.

Damit die Leitungselemente, wie es in den Figuren Fig 2a bis Fig. 2c gezeigt ist, so ausgerichtet sind, werden die Leitungselemente um den ersten Leitungselementendabschnitt 16 gedreht, so dass alle anderen Schenkelenden, also die zweiten Leitungselementendabschnitte 17 eines Leitungselements, auf einem gleichen, durch den zweiten Greifer abfahrbaren Radius liegen. Hierzu wird der Grundkörper 21 der Greifvorrichtung 20, der beispielsweise an einem Roboter befestigt ist, gedreht und/oder entsprechend geschwenkt. Dadurch dreht sich dann insbesondere auch der unbewegliche erste Greifer 25. In der praktischen Anwendung wird vor dem Greifen des jeweiligen Leitungselements die Greifvorrichtung derart relativ zu dem jeweils zu greifenden Leitungselement ausgerichtet und der zweite Greifer derart relativ zu dem ersten Greifer bewegt, dass der erste und der zweite Leitungselementabschnitt des Leitungselements gleichzeitig jeweils durch den ersten und den zweiten Greifer gegriffen werden können. Dabei erhält beispielsweise die Steuerung der Greifvorrichtung beispielsweise von einer Zuführvorrichtung zur Zuführung der Leitungselemente zu der Greifvorrichtung Informationen über die konkrete Geometrie eines jeweils zu greifenden Leitungselements, beispielsweise den Abstand der beiden Leitungselementabschnitte sowie seine Lage auf der Zuführvorrichtung. Die Steuerung richtet dann die Greifvorrichtung derart relativ zum zu greifenden Leitungselement aus und positioniert den zweiten Greifer derart relativ zum ersten Greifer, dass im Anschluss daran der erste Leitungselementabschnitt durch den ersten Greifer und der zweite Leitungselementabschnitt durch den zweiten Greifer gleichzeitig gegriffen werden können.

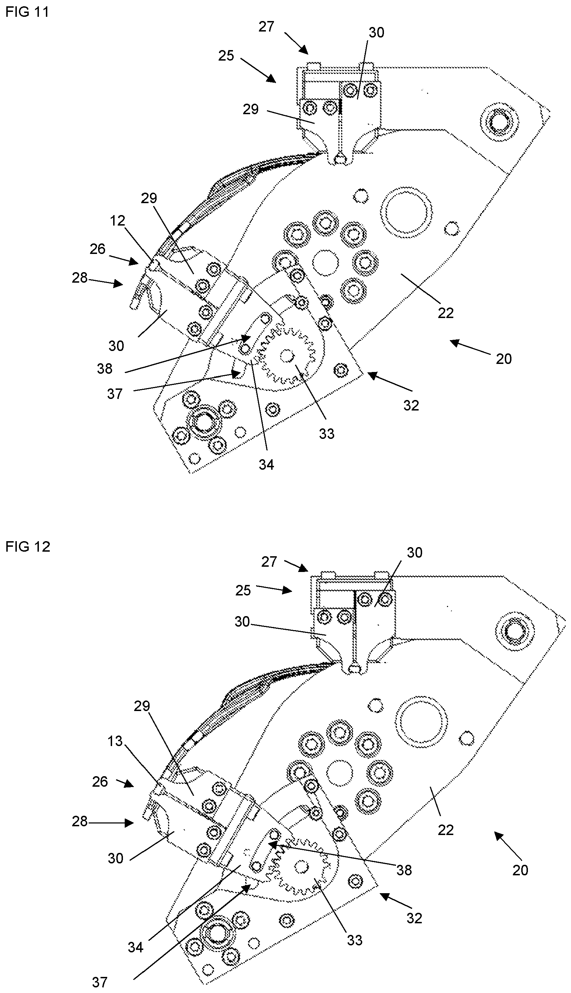

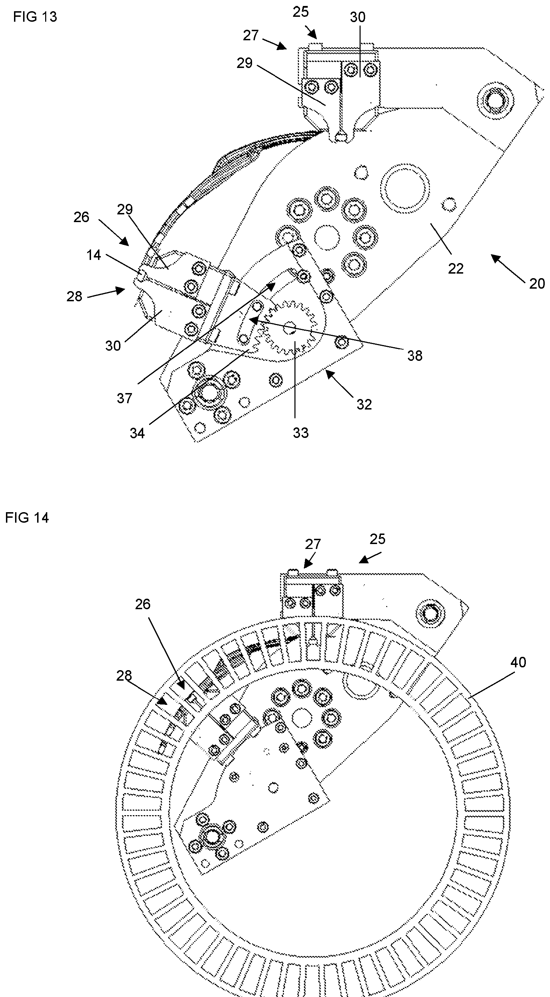

In den Figuren Fig. 9 bis Fig 13 greift der erste Greifer 27 mit seinen Greifbacken den ersten Leitungselementendabschnitt 16 und der zweite Greifer 28 mit seinen Greifbacken den zweiten ausgerichteten Leitungselementendabschnitt 17. Beim Greifen schließen der erste Greifer 27 und/oder der zweite Greifer 28 und klemmen das Leitungselement zwischen ihren Greifbacken 29, 30, welche auch als Klemmbacken bezeichnet werden können, ein. Dadurch wird das Leitungselement insbesondere an seinen beiden voneinander entfernten Leitungselementendabschnitten 16, 17 festgehalten. Beim Greifen der jeweiligen Leitungselemente bleibt der erste Greifer 27 stationär, also bewegt sich nicht, und der zweite Greifer 28 bewegt sich relativ zu dem ersten Greifer 27 oder dem Grundkörper 21 zu dem jeweiligen zweiten Leitungselementendabschnitt 17 des jeweiligen Leitungselements entlang der vorgegebenen Kreisbahn 39. Für den zweiten Greifer 28 ergeben sich bei diesem Beispiel fünf unterschiedliche Greifpunkte, die der zweite Greifer 28 anfahren muss. Zum Greifen des zweiten Leitungselementendabschnitts 17 bewegt sich der zweite Greifer 28 gegen den Uhrzeigersinn entlang der Kreisbahn 39. In Fig. 9 greift die Greifvorrichtung 20 das erste Leitungselement 10, in Fig. 10 das zweite Leitungselement 11, in Fig. 11 das dritte Leitungselement 12, in Fig. 12 das vierte Leitungselement 13 an in Fig. 13 das fünfte Leitungselement 14. Die Figuren Fig. 9 bis Fig. 13 sollen verdeutlichen, dass wenn die unterschiedlichen Leitungselemente um die Schenkelachse 19 gedreht sind, bzw. die Greifvorrichtung entsprechend zu dem zu greifenden Leitungselement ausgerichtet wurde, die zweiten Leitungselementendabschnitte 17 oder zweiten Schenkel stets relativ zur Greifvorrichtung auf dem Kreisradius liegen, und daher trotz ihrer unterschiedlichen Geometrie durch eine einfache Kinematik der zweiten Greifeinrichtung 26 die Leitungselemente an dem zweiten Leitungselementendabschnitt 17 oder Ende gegriffen werden können.

Die Greifvorrichtung wird dafür verwendet, die Leitungselemente, insbesondere nach einem Biegeprozess, vorzustecken. Unter Vorstecken wird das Positionieren der einzelne Leitungselemente zu Kränzen verstanden. Die Kränze oder Hairpin-Kränze werden anschließend durch einen oder mehrere Fügeprozesse in den Stator und/oder Rotor geführt. Das Positionieren der Leitungselemente zu Kränzen wird mithilfe von einem Adapternest 40, in welche die Leitungselemente vorgesteckt werden, vollzogen.

Das Vorstecken der gegriffenen Leitungselemente in das Adapternest 40 ist in Fig. 14. gezeigt. Zu näheren Einzelheiten des Vorsteckens wird an dieser Stelle auf die Dokumente [1] und [2] verwiesen. Das Adapternest 40 in Fig. 14 ist zum Bilden von zwei Kränzen durch die Leitungselemente ausgebildet. Es können aber auch mehr als zwei Kränzen gebildet werden. Während der Montage wird ein Leitungselement einzeln ergriffen und in das Adapternest oder Vorsteckvorrichtung oder Aufnahme gesteckt. Abhängig von der Beschaffenheit des Stators und/oder Rotors sind unterschiedliche Vorsteckbewegungen mit der Greifvorrichtung 20 von Nöten, um die Verflechtung der Kränze oder der Leitungselemente zu Kränzen realisieren zu können. Dadurch sind unterschiedliche Positionen der beiden Greifer - erster Greifer 27 und zweiter Greifer 28 - oder Greifeinrichtungen 25, 26 notwendig.

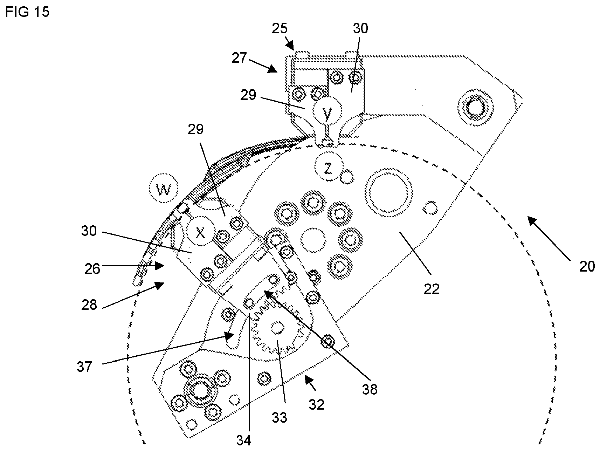

Fig. 15 zeigt Positionsmöglichkeiten des ersten Greifers 27 und des zweiten Greifers 28 relativ zu der Kreisbahn 39. Der erste Greifer 27 kann innerhalb einer Kreisbahn 39 auf der Position z und der zweite Greifer 29 außerhalb der Kreisbahn 38 auf der Position w angeordnet sein. Zusätzlich oder alternativ kann der erste Greifer 27 außerhalb der Kreisbahn 39 auf der Position y und der zweite Greifer 28 kann innerhalb der Kreisbahn 39 auf der Position x angeordnet sein. Zusätzlich oder alternativ kann der erste Greifer 27 außerhalb der Kreisbahn 39 auf der Position y und der zweite Greifer 28 kann außerhalb der Kreisbahn auf der Position w angeordnet sein. Zusätzlich oder alternativ kann der erste Greifer 27 innerhalb der Kreisbahn 39 auf der Position z und der zweite Greifer 28 kann innerhalb der Kreisbahn 39 auf der Position x angeordnet sein. In Fig. 15 ist der erste Greifer auf der Position y außerhalb der Kreisbahn 39 und der zweite Greifer 28 auf der Position x innerhalb der Kreisbahn 39 angeordnet.

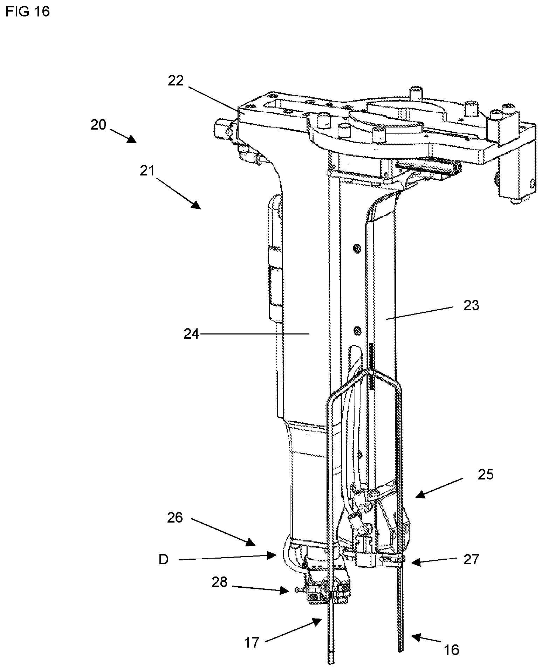

In Zusammenhang der Figuren Fig. 16 bis Fig. 19 wird die Greifvorrichtung 20 mit einer weiteren Ausführungsform der ersten Greifeinrichtung 25 und der zweiten Greifeinrichtung 26 beschrieben.

Die Greifvorrichtung 20 umfasst auch hier den Grundkörper 21, welcher eine Grundplatte 22, ein erstes Armelement 23 und ein zweites Armelement 24 aufweist. Ferner umfasst die Greifvorrichtung 20 eine erste Greifeinrichtung 25 und eine zweite Greifeinrichtung 26. Die Grundplatte 22 ist als ein plattenförmiges Werkstück oder als eine Platte ausgebildet. An die Grundplatte 22 sind an einer Fläche an einem vorbestimmten Bereich der Grundplatte 22, insbesondere einem Endbereich, das erste Armelement 23 und an einem weiteren vorbestimmten Bereich, insbesondere einem gegenüberliegenden Endbereich, an der Fläche der Grundplatte 22 das zweite Armelement 24 angeordnet. Mit anderen Worten sind das erste Armelement 23 und das zweite Armelement 24 an der Grundplatte 22 in einem vorbestimmten Abstand zueinander, insbesondere einander gegenüberliegend, besonders bevorzugt parallel zueinander, angeordnet. Hierbei erstrecken sich die beiden Armelemente - erstes Armelement 23 und zweites Armelement 24 - senkrecht oder vertikal zu der Grundplatte 22, insbesondere der Fläche der Grundplatte 22, an welcher die beiden Armelemente 23, 24 anliegen. Die beiden Armelemente 23 ,24 können als Stange oder Stab oder Schiene ausgebildet sein.

Mit anderen Worten umfasst die Greifvorrichtung 20 zwei Greifarme, welche als Armelemente 23, 24 bezeichnet werden, an welchen jeweils ein Greifer - erster Greifer 27 und zweiter Greifer 28 - verbaut ist. Die Greifarme sind an der Grundplatte 22 installiert. Diese Grundplatte wird an einem Handlingsgerät, wie zum Beispiel einem Roboter oder ähnliches, montiert und von diesem bewegt.

An dem ersten Armelement 23 ist die erste Greifeinrichtung 25 angeordnet oder daran fixiert. Mit anderen Worten hält oder lagert das erste Armelement 23 die erste Greifeinrichtung 25. Dabei ist das erste Armelement 23 mit einem Ende an der Grundplatte 22 angeordnet. An einem dem einen Ende gegenüberliegenden Ende des ersten Armelements 23 oder gegenüber der Grundplatte 22 ist die erste Greifeinrichtung 25 angeordnet. Mit anderen Worten ist das erste Armelement 23 zwischen der Grundplatte 22 und der ersten Greifeinrichtung 25 angeordnet.

Ferner ist das zweite Armelement 24 mit einem Ende an der Grundplatte 22 angeordnet oder befestigt. An einem den einen Ende gegenüberliegenden Ende des zweiten Armelements 24 oder gegenüber der Grundplatte 22 ist die zweite Greifeinrichtung 26 angeordnet oder befestigt. Mit anderen Worten ist das zweite Armelement 24 zwischen der Grundplatte 22 und der zweiten Greifeinrichtung 24 angeordnet. Mit anderen Worten umfasst die Greifvorrichtung 20 die Grundplatte 22, an der zwei Arme oder Armelemente 23, 24 angeordnet sind. An jedem dieser Arme ist eine Greifeinrichtung 25, 26 verbaut, die je einen der beiden Leitungselementendabschnitte 16, 17 oder zusammen einen der beiden Leitungselementendabschnitte 16, 17 greifen soll.

Die erste Greifeinrichtung 25 weist den ersten Greifer 27 und die zweite Greifeinrichtung 26 den zweiten Greifer 28 auf. Beispielsweise sind der erste Greifer 27 und der zweite Greifer 28 als, insbesondere pneumatischer, Parallelgreifer ausgebildet.

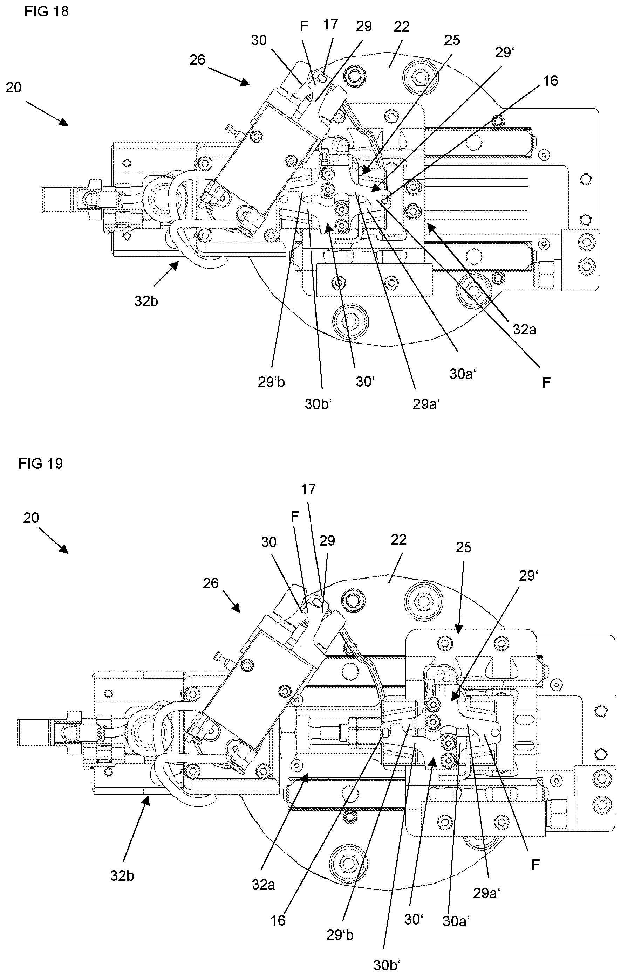

Der zweite Greifer 28 ist ähnlich wie die in Zusammenhang mit Fig. 6 beschriebenen Greifer aufgebaut oder ausgestaltet. Der zweite Greifer 28 ist dazu eingerichtet, insbesondere mit seinen Greifbacken, das Leitungselement an dem zweiten Leitungselementendabschnitt 17 oder auch an dem ersten Leitungselementendabschnitt 16 zugreifen. Hierbei umfasst die Greiffläche 31 des zweiten Greifers 28 den zweiten Leitungselementendabschnitt 17 oder den ersten Leitungselementendabschnitt 16. Wie in den Figuren Fig. 18 und Fig. 19 gezeigt, weist der zweite Greifer 28 zwei Greifbacken - eine erste Greifbacke 29 und eine zweite Greifbacke 30 auf. Beide Greifbacken 29, 30 weisen jeweils eine Greiffläche 31 auf. Dabei ist die Greiffläche 31 der Greifbacken 29, 30 nach innen gewölbt oder konkav oder mondförmig ausgebildet. Anders als die Greifbacken des zweiten Greifers 28 in Fig. 6 weist die erste Greifbacke 29 einen Fortsatz F. Der Fortsatz F erstreckt sich von der ersten Greifbacke 29 in Richtung der zweiten Greifbacke 30. Der Fortsatz F umfasst oder bildet einen Teil der Greiffläche 31. Durch den Fortsatz F überlappt die erste Greifbacke 29 mit der zweiten Greifbacke 30. Durch den Fortsatz F und/oder die Greiffläche 31 wird der zwischen den Greifbacken 29, 30 aufgenommene zweite Leitungselementendabschnitt 17 oder erste Leitungselementendabschnitt 16 eingefasst. Zusätzlich oder alternativ kann auch die zweite Greifbacke 30 diesen Fortsatz aufweisen. Der Fortsatz F erstreckt sich dann von der zweiten Greifbacke 30 in Richtung der ersten Greifbacke 29 auf. Der Fortsatz F umfasst einen Teil der Greiffläche 31. Durch den Fortsatz F überlappt die erste Greifbacke 29 mit der zweiten Greifbacke 30.

Der zweite Greifer 28 ist beweglich ausgebildet. Der zweite Greifer 28 ist relativ zu der Grundplatte 22 oder dem Grundkörper 21 und/oder dem ersten Greifer 27 oder der ersten Greifeinrichtung 25 beweglich. Zum Bewegen des zweiten Greifers 28 weist die zweite Greifeinrichtung 26 eine zweite Bewegungseinheit 32b auf. Die zweite Bewegungseinheit 32b ist anders als die Bewegungseinheit 32, wie sie im Zusammenhang mit den Figuren Fig. 7 und Fig. 8 beschrieben wurde, ausgebildet. Die zweite Bewegungseinheit 32b umfasst einen Mechanismus zum Drehen des zweiten Greifers 28. Insbesondere weist die zweite Bewegungseinheit 32b einen Drehmechanismus auf. Mit anderen Worten kann der zweite Greifer 28 gedreht werden. Hierzu weist die zweite Bewegungseinheit 32b oder die zweite Greifeinrichtung 26 eine Drehachse D auf. Dabei umfasst der zweite Greifarm 24 an einem Endbereich, insbesondere an dem der zweite Greifer 28 angeordnet ist, besonders bevorzugt gegenüber der Grundplatte 22, eine Drehachse D, die dazu eingerichtet ist, den zweiten Greifer 28 zu bewegen oder zu drehen. Mit "Drehachse" ist insbesondere eine Achse gemeint, um die eine Drehung erfolgt. Diese Drehachse D ermöglicht es insbesondere verschiedene Geometrien an Hairpins, beispielsweise unterschiedliche Schenkelabstände der Hairpins, mit dieser Greifvorrichtung 20 greifen zu können.

Der erste Greifer 27 ist dazu eingerichtet, insbesondere mit seinen Greifbacken, das Leitungselement an dem ersten Leitungselementendabschnitt 16 oder an dem zweiten Leitungselementendabschnitt zu greifen. Hierbei umfasst die Greiffläche 31 des ersten Greifers 27 den ersten Leitungselementendabschnitt 16 oder den zweiten Leitungselementendabschnitt 17.

Der erste Greifer 27 und/oder das erste Armelement 23 und/oder die erste Greifeinrichtung 25 ist ferner linear beweglich angeordnet. Mit anderen Worten ist der erste Greifer 27 und/oder das erste Armelement 23 und/oder die erste Greifeinrichtung 25 dazu eingerichtet, eine Linearbewegung auszuführen. Zum Bewegen oder Ausführen der Linearbewegung des ersten Greifers 27 und/oder des ersten Armelements 23 und/oder der ersten Greifeinrichtung 25 weist die Greifvorrichtung 20 bevorzugt eine erste Bewegungseinheit 32a auf. Die erste Bewegungseinheit 32a ist dazu eingerichtet, den ersten Greifer 27 und/oder das erste Armelement 23 und/oder die erste Greifeinrichtung 25 relativ zu dem Grundkörper 22 und/oder den zweiten Greifer 28 zu bewegen. Mit anderen Worten kann der erste Greifer 27 und/oder das erste Armelement 23 der ersten Greifeinrichtung 25 und/oder die erste Greifeinrichtung 25 mittels der ersten Bewegungseinheit 32a bewegt werden. Mit anderen Worten kann der erste Greifer 27 und/oder das erste Armelement 23 und/oder die erste Greifeinrichtung 25 auf der ersten Bewegungseinheit 32a verbaut sein, die eine Linearbewegung, insbesondere als Relativbewegung zur Grundplatte 22, zulässt.

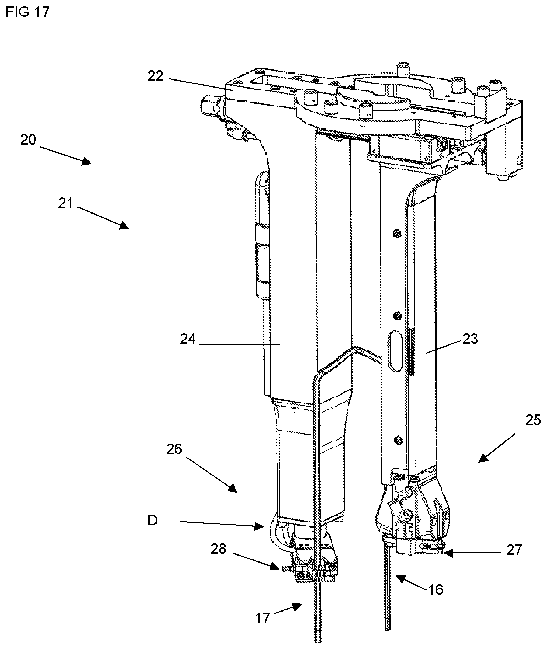

Durch diese Linearbewegung kann ein Hairpin auf die unterschiedlichsten Arten gegriffen werden. Befindet sich das erste Armelement 23, also der erste Greifarm auf seiner linken Position, wie in Fig. 16 und Fig. 18 gezeigt, so kann ein Hairpin von einer Seite gegriffen werden, das heißt in Bezug auf den Hairpin befinden sich beide Greifer, also der erste Greifer 27 und der zweite Greifer 28, auf einer Hairpin-Seite. Befindet sich das erste Armelement 23, also der erste Greifarm auf seiner rechten Position, wie in Fig. 17 und Fig. 19 gezeigt, so kann ein Hairpin von beiden Seiten gegriffen werden, das heißt in Bezug auf den Hairpin befindet sich ein Greifer auf der einen Hairpin-Seite, während sich der andere Greifer auf der anderen Hairpin-Seite befindet.

Die erste Bewegungseinheit 32a kann beispielsweise eine Schiene umfassen, welche an einer Fläche oder Seite der Grundplatte 22, welche dem ersten Greifer 27 und dem zweiten Greifer 28 zugewandt ist, angeordnet sein. Dabei kann das erste Armelement 23 entlang der Schiene verfahren werden. Ferner kann die erste Bewegungseinheit 32a zum Verfahren oder Verschieben des ersten Armelements 23 einen Zylinder umfassen. Beispielsweise kann die erste Bewegungseinheit 32a einen Hubzylinder oder eine Gasdruckfeder umfassen.

Ferner sind der erste Greifer 27 und der zweite Greifer 28 in ihrer Höhe zueinander versetzt angeordnet. Mit anderen Worten können der erste Greifer 27 und der zweite Greifer 28 in die Hochrichtung der Greifvorrichtung 20 unterschiedlich oder versetzt zueinander angeordnet sein.

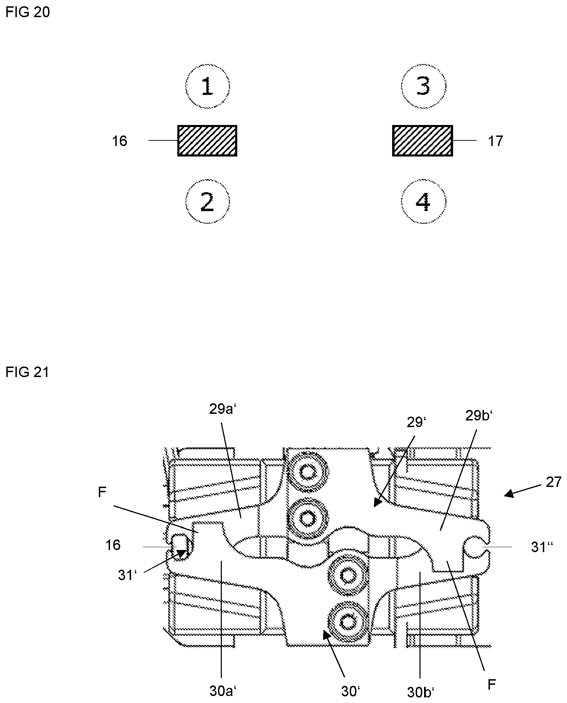

Fig. 20 zeigt schematisch die beiden Schenkel eines Hairpins, also Leitungselements, mit dem ersten Leitungselementendabschnitt 16 und dem zweiten Leitungselementendabschnitt 17 in einer Schnittansicht und vier mögliche Positionen 1, 2, 3, 4 eines Greifers oder der beiden Greifer 27, 28 der Greifvorrichtung 20. Die Kombination aus Handlingsgerät und Greifvorrichtung 20, also einem System, welches das Handlingsgerät und die Greifvorrichtung 20 umfasst, lässt alle erdenklichen Varianten an Greifpositionen zu. Das heißt jede Greifposition 1, 2, 3, 4 kann von jedem der beiden Greifer 27, 28 in allen Kombinationen angefahren werden. Nimmt der erste Greifer 27 beispielsweise die Greifposition 1 an, dann kann der zweite Greifer 28 alle vier möglichen Greifpositionen 1, 2, 3, 4 anfahren. Alternativ kann beispielsweise der zweite Greifer 28 die Greifposition 1 und der erste Greifer 27 alle vier möglichen Greifpositionen 1, 2, 3, 4 anfahren. Dabei kann der zweite Greifer 28 auch die identische Greifposition von dem ersten Greifer 27 anfahren oder der erste Greifer 27 kann die identische Greifposition von dem zweiten Greifer 28 anfahren. Das ist dadurch möglich, dass der erste Greifer 27 und der zweite Greifer 28 in ihrer Höhe zueinander versetzt angeordnet sind. Somit kann auch nur ein Schenkel, also Leitungselementendabschnitt, beispielsweise der erste Leitungselementendabschnitt 16 oder der zweite Leitungselementendabschnitt 17, von beiden Greifern 27, 28 gegriffen werden. Diese Flexibilität hat größte Vorteile was das Be- und Entladen des Hairpins, also Leitungselements, in beziehungsweise aus verschiedenen (Produktions-)Einheiten bedeutet. Somit muss der Hairpin der Greifvorrichtung von einer (Produktions-)Einheit nicht auf eine definierte Art und Weise übergeben werden, da die Greifvorrichtung sich an die jeweilige (Produktions-)Einheit anpassen kann. Dies führt zu erheblich vereinfachtem Konstruktionsaufwand an den einzelnen (Produktions-)Einheiten und bringt gleichzeitig erheblichen Taktzeitvorteilen in der Hairpinproduktion und dem Hairpintransport mit sich.

Wie aus Fig. 21 ersichtlich, ist der erste Greifer 27 in den Ausführungsformen der Figuren Fig. 16 bis Fig. 19, anders ausgebildet als der erste Greifer 27 in den Ausführungsformen der Figuren Fig. 3 bis Fig. 15. Neben dem, dass der erste Greifer 27 beweglich ausgebildet ist, besitzt der erste Greifer 27 zwei Greifpunkte. Hierzu weist der erste Greifer 27 zwei Greifbacken 29', 30' auf. Die beiden Greifbacken 29', 30' umfassen zwei Greifbackenelemente 29a', 30a', 29b', 30b'. Die Greifbackenelemente 29a', 30a', 29b', 30b' sind einander gegenüberliegend angeordnet. Das erste Greifbackenelement 29a' der ersten Greifbacke 29' ist dem ersten Greifbackenelement 30a' der zweiten Greifbacken 30' zugeordnet oder zugewiesen. Jedes Greifbackenelement 29a', 30a', 29b', 30b' weist eine Greiffläche auf. Das erste Greifbackenelement 29a' der ersten Greifbacke 29' und das erste Greifbackenelement 30a' der zweiten Greifbacke 30' weist jeweils eine erste Greiffläche 31' auf. Das zweite Greifbackenelement 29b' der ersten Greifbacke 29' und das zweite Greifbackenelement 30b' der zweiten Greifbacke 30' weist jeweils eine zweite Greiffläche 31" auf. Zusammen bilden oder umfassen das erste Greifbackenelement 29a' der ersten Greifbacke 29' und das erste Greifbackenelement 30a' der zweiten Greifbacken 30' einen ersten Greifpunkt. Das zweite Greifbackenelement 29b' der ersten Greifbacke 29' ist dem zweiten Greifbackenelement 30b' der zweiten Greifbacken 30' zugeordnet oder zugewiesen. Zusammen bilden oder umfassen das zweite Greifbackenelement 29b' der ersten Greifbacke 29' und das zweite Greifbackenelement 30b' der zweiten Greifbacke 30' einen zweiten Greifpunkt. Hierdurch bilden sich insbesondere die beiden Greifpunkte. Die erste Greiffläche 31' und die zweite Greiffläche 31" sind einander gegenüberliegend oder entgegengesetzt zueinander angeordnet. Das erste Greifbackenelement 29a' der ersten Greifbacke 29' und das erste Greifbackenelement 30a' der zweiten Greifbacke 30' sowie das zweite Greifbackenelement 29b' der ersten Greifbacke 29' und das zweite Greifbackenelement 30b' der zweiten Greifbacke 30' können wie die bereits in Zusammenhang mit Figur Fig. 18 und Fig. 19 beschriebene zweite Greifer 28 beziehungsweise dessen Greifbacken mit dem Fortsatz F ausgebildet sein. Nur weist der erste Greifer zwei paar dieser Greifbacken auf, welche entgegengesetzt zueinander angeordnet sind. Die so ausgeformten Greifbacken oder Backen des ersten Greifers 27 ermöglichen es, dass mit lediglich einem Greifer beide Greifpunkte geschlossen oder geöffnet werden können und man nicht zwei Aktoren oder Greifer verbauen muss - was zu erheblichen Platz- und Gewichtsproblemen führen würde. Je nach Stellung des rechten Armes, also des ersten Armelements 23, ist entweder Greifpunkt 1 oder Greifpunkt 2 in aktiver Position - also so angeordnet, dass er einen Hairpinschenkel greifen kann.

Alternativ kann der erste Greifer 27 wie der zweite Greifer 28 ausgebildet sein. Anstelle, dass der erste Greifer 27 linear verschoben wird, kann der erste Greifer 27 und/oder das erste Armelement 23 dann um eine Drehachse gedreht werden.

Insgesamt wird durch Ausgestaltungen der Erfindung das Greifen von Hairpins mittels einer Greifvorrichtung beschrieben.

Das Greifkonzept besteht darin, alle Hairpins durch einen stationären oder unbeweglichen Greifer an einem Schenkel zu greifen. Auf der anderen Seite ergeben sich dann fünf Greifpositionen.

Zunächst werden je ein Schenkel aller unterschiedlichen Hairpins deckungsgleich übereinander gelegt. Anschließend erfolgt eine Drehung aller Hairpins um die Schenkelachse M, so dass sich an allen anderen Schenkel-Enden ein gemeinsamer Durchmesser D ergibt. Danach werden alle unterschiedlichen Schenkelpositionen der anderen Schenkel durch lediglich einen Aktor angefahren. Dadurch wird die Vorrichtung kostengünstig und vor allem kompakt.

Das gesamte Greifsystem kann beispielsweise an einem Roboter verbaut werden. Das Greifsystem umfasst eine Grundplatte, die beispielsweise mit oder an einem Roboter verschraubt ist, an der zwei Arme verschraubt sind. An jedem dieser Arme ist ein Greifer verbaut, der je einen der beiden HairpinSchenkel greifen soll. Am zweiten Arm ist der bewegliche Greifer und am ersten Arm der stationäre Greifer verbaut. Im vorliegenden Fall finden zwei Parallelgreifer zum Greifen der Schenkel Anwendung. Die Greifbacken der Parallelgreifer sind an deren Greifflächen rund ausgeführt. Dadurch wird eine Drehung im jeweiligen Parallelgreifer nur dadurch verhindert, dass jeder Hairpin noch an seinem zweiten Schenkel vom anderen Parallelgreifer gegriffen wird. Der eine Parallelgreifer ist stationär oder nicht beweglich. Der andere Parallelgreifer kann die verschiedenen Positionen der zweiten Schenkel anfahren. Die Aufnahme des beweglichen Greifers beinhaltet die Mechanik für die Bewegung.

Eine Mechanik bewegt den zweiten Greifer. Die Mechanik weist ein angetriebenes Zahnrad auf, welches zum Beispiel durch einen Schrittmotor betrieben werden kann. Die Zähne des außenverzahnten, angetriebenen Zahnrades oder Antriebsrades greifen in ein Teilstück eines innenverzahnten Zahnrades oder einer Abtriebsplatte, welches oder welche das angetriebene Zahnrad darstellt. Auf der Abtriebsplatte sind ein oder mehrere Führungselemente angebracht. Die Führungselemente führen die Abtriebsplatte auf einem definierten Durchmesser in der Aufnahme. In der Aufnahme sind Aufnahmen für die Führungselemente vorgesehen. Die Aufnahmen können durch Nuten realisiert sein. An der Abtriebsplatte ist der zweite Greifer mit seinen Greifbacken montiert. Treibt der Antrieb das Antriebsrad an, wird der Parallelgreifer dadurch auf der, durch die Führungselemente und deren Aufnahme definierten, Durchmesserbahn bewegt. Durch die vorgegebene oder spezifische Anordnung der Hairpins lassen sich so alle verschiedenen Hairpins eines Stators aufnehmen und definiert greifen.

Der Vorteil der Zahnradübersetzung ist, dass der Drehpunkt der Abtriebsplatte und somit der Drehpunkt des Greifers nicht deckungsgleich mit dem Mittelpunkt des Antriebs P sein müssen. Dies führt zu einem sehr kompakten System, weil P deutlich näher an gestrichelter Linie als N. Des Weiteren bringt die Zahnradübersetzung auch eine vorteilhafte Kraftübersetzung mit sich. Aktuell wird das Greifsystem dafür verwendet, Hairpins nach dem Biegeprozess vorzustecken. Unter Vorstecken wird das Positionieren einzelner Hairpins zu Hairpin-Kränzen verstanden. Die Hairpin-Kränze werden anschließend durch einen oder mehrere Fügeprozesse in den Stator gefügt. Das Positionieren der Hairpins zu Kränzen wird mit Hilfe von Adapternestern, in welche die Hairpins vorgesteckt werden, vollzogen. Abhängig von der Beschaffenheit des Stators sind unterschiedliche Vorsteckbewegungen mit dem Greifsystem von Nöten, um die Verflechtung der Hairpins oder Kränze realisieren zu können. Dadurch sind unterschiedliche Positionen der beiden Greifarme mit stationärem und beweglichem Greifer nötig. Für beide Greifer sind jedoch auch alle anderen Positionskombinationen in Bezug auf den Durchmesser denkbar.

Neben dem Vorstecken der Hairpins ist die Vorrichtung aber auch für alle anderen HandlingsProzesse von Gegenständen mit zwei Schenkeln, deren Positionen variieren, denkbar.

Gemäß einer alternativen Ausführungsform umfasst die Greifvorrichtung zwei Greifarme oder Armelemente, an welchen jeweils ein Greifer, zum Beispiel pneumatischer Parallelgreifer oder ähnliche, verbaut sind. Die Greifarme sind an einer Grundplatte installiert. Diese Grundplatte wird an einem Handlingsgerät, zum Beispiel einen Roboter oder ähnliches, montiert und von diesem bewegt.

Der zweite Greifarm besitzt im unteren Bereich eine Drehachse, die den Greifer des zweiten Armes bewegen kann. Diese Drehachse ermöglicht es verschiedene Geometrien an Hairpins, zum Beispiel unterschiedliche Schenkelabstände, mit diesem Greifsystem greifen zu können.

Der erste Greifarm oder der erste Greifer des ersten Greifarmes ist auf einer Bewegungseinheit verbaut, die eine Linearbewegung zulässt, insbesondere eine Relativbewegung zur Grundplatte. Den gleichen Effekt kann man erzielen, wenn sich der erste Greifarm um den Schenkelmittelpunkt des rechten Schenkels drehen lässt. Durch diese Linearbewegung kann ein Hairpin auf die unterschiedlichsten Arten gegriffen werden. Befindet sich der erste Greifarm auf seiner linken Position so kann ein Hairpin von einer Seite gegriffen werden, das heißt in Bezug auf den Hairpin befinden sich beide Greifer, also der Greifer des zweiten Greifarmes und der Greifer des ersten Greifarmes, auf einer Hairpin-Seite. Befindet sich der zweite Greifarm auf seiner rechten Position so kann ein Hairpin von beiden Seiten gegriffen werden, das heißt in Bezug auf den Hairpin befindet sich ein Greifer auf der einen Hairpin-Seite, während sich der andere Greifer auf der anderen Hairpin-Seite befindet. Die Linearbewegung des ersten Armelements macht das Greifsystem extrem flexibel.

Zusammenfassend lässt sich sagen, dass die Kombination aus Handlingsgerät, insbesondere Roboter oder ähnliches, an dem die beschriebene Greifvorrichtung montiert wird, mit der beschriebenen Greifvorrichtung ein äußerst flexibles Greifen von Hairpins ermöglicht. Die Kombination aus Handlingsgerät und Greifvorrichtung lässt alle erdenklichen Varianten an Greifpositionen zu. Das heißt jede Greifposition kann von jedem der beiden Greifer in allen Kombinationen angefahren werden. Nimmt ein Greifer beispielsweise eine Greifposition an, dann kann der andere Greifer vier mögliche Greifpositionen anfahren - auch die identische Greifposition von dem anderen Greifer. Das ist dadurch möglich, dass die beiden Greifer in ihrer Höhe zueinander versetzt angeordnet sind. Somit kann auch nur ein Schenkel des Hairpins, also ein Leitungselementendabschnitt, von beiden Greifern gegriffen werden. Diese Flexibilität hat größte Vorteile was das Be- und Entladen des Hairpins in beziehungsweise aus verschiedenen (Produktions-)Einheiten bedeutet. Somit muss der Hairpin dem Greifsystem von einer (Produktions-)Einheit nicht auf eine definierte Art und Weise übergeben werden, da das Greifsystem sich an die jeweilige (Produktions-)Einheit anpassen kann. Dies führt zu erheblich vereinfachtem Konstruktionsaufwand an den einzelnen (Produktions-)Einheiten und bringt gleichzeitig erheblichen Taktzeitvorteilen in der Hairpinproduktion und dem Hairpintransport mit sich.

Die Greifbacken des ersten Greifers sind speziell ausgeformt. Besagte Greifbacken besitzen nicht nur einen Greifpunkt, wie das beim zweiten Greifer der Fall ist, sondern zwei Greifpunkte. Die so ausgeformten Backen ermöglichen es, dass mit lediglich einem Greifer, zum Beispiel ein pneumatischer Greifer, beide Greifpunkte geschlossen beziehungsweise geöffnet werden können und man nicht zwei Aktoren verbauen muss - was zu erheblichen Platz- und Gewichtsproblemen führen würde. Je nach Stellung des ersten Armes ist entweder Greifpunkt 1 oder Greifpunkt 2 in aktiver Position - also so angeordnet, dass er einen Hairpinschenkel greifen kann.

### Bezugszeichenliste:

- 10: erstes Leitungselement
- 11: zweites Leistungselement
- 12: drittes Leistungselement
- 13: viertes Leistungselement
- 14: fünftes Leistungselement
- 15: sechstes Leistungselement
- 16: erster Leitungselementendabschnitt
- 17: zweiter Leitungselementendabschnitt
- 18: Kreislinie
- 19: Schenkelachse
- 20: Greifvorrichtung
- 21: Grundkörper
- 22: Grundplatte
- 23: erstes Armelement
- 24: zweites Armelement
- 25: erste Greifeinrichtung
- 26: zweite Greifeinrichtung
- 27: erster Greifer
- 28: zweiter Greifer
- 29: erste Greifbacke
- 29': erste Greifbacke
- 29a': erstes Greifbackenelement
- 29b': zweites Greifbackenelement
- 30: zweite Greifbacke
- 30': zweite Greifbacke
- 30a': erstes Greifbackenelement
- 30b': zweites Greifbackenelement
- 31: Greiffläche
- 31': erste Greiffläche
- 31": zweite Greiffläche
- 32: Bewegungseinheit
- 32a: erste Bewegungseinheit
- 32b: zweite Bewegungseinheit
- 33: erstes Zahnrad
- 34: zweites Zahnrad
- 35: Antriebseinheit
- 36: Aufnahmeeinheit
- 37: Aufnahmebereich
- 38: Führungselement
- 39: Kreisbahn
- 40: Adapternest
- D: Drehachse
- F: Fortsatz

## Patentansprüche

1. Greifvorrichtung (20) zum Greifen zumindest eines von mehreren Leitungselementen (10-15), die als U-förmig gebogenes Spulenelement in Form eines elektrisch leitfähigen Hairpins zur Herstellung einer Spulenwicklung eines Bauteils einer elektrischen Maschine ausgebildet sind, wobei das als Hairpin ausgebildete Leitungselement (10-15) einen ersten Leitungselementendabschnitt (16) und einen zweiten Leitungselementendabschnitt (17) umfasst, umfassend:
- einen Grundkörper (21),
- eine erste Greifeinrichtung (25), welche einen ersten Greifer (27) umfasst,
- eine zweite Greifeinrichtung (26), welche einen zweiten Greifer (28) umfasst, welcher relativ zu dem Grundkörper (21) beweglich angeordnet ist, und
eine Steuerung,
**dadurch gekennzeichnet, dass**
dass die erste Greifeinrichtung (25) dazu eingerichtet ist,
a) den ersten Leitungselementendabschnitt (16) oder
b) den zweiten Leitungselementendabschnitt (17) eines vorbestimmten Leitungselements mittels des ersten Greifers (27) zu greifen,
dass die zweite Greifeinrichtung (26) dazu eingerichtet ist, den zweiten Greifer (28) relativ zu dem ersten Greifer (27) derart zu bewegen, dass der zweite Greifer (28) das vorbestimmte Leitungselement
a) an dem zweiten Leitungselementendabschnitt (17) oder
b) an dem ersten Leitungselementendabschnitt (16) greift,
und dass die Greifvorrichtung (20) dazu eingerichtet ist, unterschiedliche Geometrien von als Hairpin ausgebildeten Leitungselementen (10-15) zu greifen und zeitlich nacheinander auf einer vorbestimmten Position angeordnete einzelne als Hairpin ausgebildete Leitungselemente (10-15) einzeln zu greifen.

2. Greifvorrichtung (20) nach Anspruch 1,
**dadurch gekennzeichnet,**
**dass** der erste Greifer (27) relativ zu dem Grundkörper (21) stationär ausgebildet ist.

3. Greifvorrichtung (20) nach Anspruch 1,
**dadurch gekennzeichnet, dass**
3.1 der erste Greifer (27) und/oder die erste Greifeinrichtung (25) und/oder ein erstes Armelement (23), an welchem der erste Greifer (27) angeordnet ist, relativ zu dem Grundkörper (21) und/oder relativ dem zweiten Greifer (28) beweglich angeordnet ist; und/oder
3.2 der erste Greifer (27) und/oder die erste Greifeinrichtung (25) und/oder ein erstes Armelement (23), an welchem der erste Greifer (27) angeordnet ist, linear beweglich angeordnet ist; und/oder
3.3 der erste Greifer (27) und/oder die erste Greifeinrichtung (25) und/oder ein erstes Armelement (23), insbesondere um eine Drehachse, drehbar gelagert ist; und/oder
3.4 der erste Greifer (27) um einen Mittelpunkt des zu greifenden ersten Leitungselementendabschnitts (16) oder zweiten Leitungselementendabschnitts (17) drehbar ist; und/oder
3.5 der erste Greifer (27) und der zweite Greifer (28) in ihrer Höhe zueinander, insbesondere in eine Hochrichtung der Greifvorrichtung (20), versetzt angeordnet sind; und/oder
3.6 die Greifvorrichtung (20) zum Greifen eines U-förmig gebogenen Spulenelements, insbesondere eines elektrisch leitfähigen Pins, mehr insbesondere eines Hairpins, ausgebildet ist.

4. Greifvorrichtung (20) nach einem der vorhergehenden Ansprüche,
**dadurch gekennzeichnet, dass**
4.1 die zweite Greifeinrichtung (26) eine Bewegungseinheit (32; 32b) umfasst, welche dazu eingerichtet ist, den zweiten Greifer (28) relativ zu dem Grundkörper (21) zu bewegen; und/oder
4.2 die zweite Greifeinrichtung (26) eine Bewegungseinheit (32; 32b) umfasst, welche dazu eingerichtet ist, den zweiten Greifer (28) und/oder ein zweites Armelement (24), an dem der zweite Greifer (28) angeordnet ist, relativ zu dem Grundkörper (21) entlang einer Kreisbahn zu bewegen; und/oder
4.3 der zweite Greifer (28) und/oder ein zweites Armelement (24), an dem der zweite Greifer (28) angeordnet ist, insbesondere um eine Drehachse, drehbar gelagert ist, wobei die zweite Greifeinrichtung (26) eine Bewegungseinheit (32; 32b) umfasst, welche dazu eingerichtet ist, den zweiten Greifer (28) und/oder das zweite Armelement (24) zu drehen.

5. Greifvorrichtung (20) nach einem der vorhergehenden Ansprüche,
**dadurch gekennzeichnet, dass**
der Grundkörper (21) eine Grundplatte (22) umfasst, wobei an der Grundplatte (22) ein erstes Armelement (23) und ein zweites Armelement (24) angeordnet sind, wobei sich die beiden Armelemente (23; 24) vertikal zur Grundplatte (22) erstrecken, wobei die erste Greifeinrichtung (25) an dem ersten Armelement (23) und die zweite Greifeinrichtung (26) an dem zweiten Armelement (24) angeordnet sind.

6. Greifvorrichtung (20) nach einem der vorhergehenden Ansprüche,
**dadurch gekennzeichnet, dass**
der erste Greifer (27) und der zweite Greifer (28) jeweils zwei Greifbacken (29; 30; 29'; 30') aufweisen, wobei eine jeweilige Greiffläche (31) der jeweiligen Greifbacken (29; 30; 29'; 30') konkav ausgebildet ist.

7. Greifvorrichtung (20) nach Anspruch 6,
**dadurch gekennzeichnet, dass**
7.1 jeweils eine Greifbacke des ersten Greifers (27) zwei Greifbackenelemente umfasst, wobei ein erstes Greifbackenelement (29a') einer ersten Greifbacke (29') einem ersten Greifbackenelement (30a') einer zweiten Greifbacke (30') und ein zweites Greifbackenelement (29b') der ersten Greifbacke (29') einem zweiten Greifbackenelement (30b') der zweiten Greifbacke (30) zugeordnet ist, wobei die ersten Greifbackenelemente (29a', 30a') und die zweiten Greifbackenelemente (29b', 30b') einander gegenüberliegend angeordnet sind; und/oder
7.2 der erste Greifer (27) als Doppelgreifer ausgebildet ist.

8. Greifvorrichtung (20) nach einem der voranstehenden Ansprüche,
**dadurch gekennzeichnet,**
**dass** der Grundkörper (21) an eine Transporteinrichtung zum Bewegen der Greifvorrichtung (20) anlenkbar ist.

9. Hairpin-Handhabungsvorrichtung zum Handhaben von Hairpins zur Herstellung einer Spulenwicklung eines Bauteils einer elektrischen Maschine, umfassend eine Greifvorrichtung (20) nach Anspruch 8 und eine Transporteinrichtung zum Bewegen der Greifvorrichtung (20) sowie eine Steuerung.

10. Verfahren zum Greifen von als U-förmig gebogene Spulenelemente in Form von elektrisch leitfähigen Hairpins zur Herstellung einer Spulenwicklung eines Bauteils einer elektrischen Maschine ausgebildeten Leitungselementen mittels einer Greifvorrichtung (20), wobei die Greifvorrichtung (20) dazu eingerichtet ist, unterschiedliche Geometrien von als Hairpins ausgebildeten Leitungselementen zu greifen, wobei die Greifvorrichtung (20) einen Grundkörper (21), eine erste Greifeinrichtung (25), welche einen ersten Greifer (27) umfasst, und eine zweite Greifeinrichtung (26) aufweist, welche einen zweiten Greifer (28) umfasst, welcher relativ zu dem Grundkörper (21) beweglich angeordnet ist, umfassend die Schritte:
- Anordnen einzelner vorbestimmter als Hairpins ausgebildeter Leitungselemente (10, 11, 12, 13, 14, 15) zeitlich nacheinander auf einer vorbestimmten Position und einzelnes Greifen mit der Greifvorrichtung (20);
- Greifen
a) eines ersten Leitungselementendabschnitts (16) oder
b) eines zweiten Leitungselementendabschnitt (17)
jedes vorbestimmten Leitungselements mittels des ersten Greifers (27) der ersten Greifeinrichtung (25) an der vorbestimmten Position;
- Bewegen des zweiten Greifers (28) relativ zu dem ersten Greifer (27) zur Anpassung an eine Position
a) des zweiten Leitungselementendabschnitts (17) des vorbestimmten Leitungselements oder
b) des ersten Leitungselementendabschnitts (16) des vorbestimmten Leitungselements und
- Greifen des zweiten Leitungselementendabschnitts (17) des Leitungselements oder des ersten Leitungselementendabschnitts (16) des Leitungselements mittels des zweiten Greifers (28).

11. Verfahren nach Anspruch 10,
**dadurch gekennzeichnet, dass**
der zweite Greifer (28) zum Greifen des zweiten Leitungselementendabschnitts (17) des vorbestimmten Leitungselements oder des ersten Leitungselementendabschnitts (16) des vorbestimmten Leitungselements entlang einer vorbestimmten Kreisbahn (39) zu dem zweiten Leitungselementendabschnitt (17) oder dem ersten Leitungselementendabschnitt (16) bewegt wird.

12. Verfahren nach einem der Ansprüche 10 oder 11,
**dadurch gekennzeichnet, dass**
mit der Greifvorrichtung (20) zeitlich nacheinander mehrere Leitungselemente gegriffen werden, wobei vor dem Greifen des jeweiligen Leitungselementendabschnitts (16; 17) das Leitungselement um eine Schenkelachse (19) eines der beiden Leitungselementendabschnitte (16; 17) gedreht wird, sodass der andere Leitungselementendabschnitt (16; 17) auf einer Kreisbahn (39) angeordnet ist.

13. Verfahren nach einem der Ansprüche 10 oder 11,
**dadurch gekennzeichnet, dass**
mit der Greifvorrichtung (20) zeitlich nacheinander mehrere Leitungselemente gegriffen werden, wobei vor dem Greifen des jeweiligen Leitungselements die Greifvorrichtung (20) derart relativ zu dem jeweils zu greifenden Leitungselement ausgerichtet und der zweite Greifer (28) derart relativ zu dem ersten Greifer (27) bewegt wird, dass der erste und der zweite Leitungselementabschnitt (16, 17) des Leitungselements gleichzeitig jeweils durch den ersten und den zweiten Greifer (27, 28) gegriffen werden können.

14. Verfahren nach einem der Ansprüche 10 bis 13,
**dadurch gekennzeichnet, dass**
nach dem Greifen des vorbestimmten Leitungselements das Leitungselement, insbesondere in ein Adapternest (40), mittels der Greifvorrichtung (20) vorgesteckt wird, wobei zeitlich nacheinander mehrere Leitungselemente zu einem Kranz vorgesteckt werden.

15. Verfahren nach Anspruch 14,
**dadurch gekennzeichnet, dass**
zum Vorstecken die erste Greifeinrichtung (25) und die zweite Greifeinrichtung (26) positioniert werden, sodass der erste Greifer (27) innerhalb einer Kreisbahn (39) und der zweite Greifer (28) außerhalb der Kreisbahn (39) oder der erste Greifer (27) außerhalb der Kreisbahn (39) und der zweite Greifer (28) innerhalb der Kreisbahn (39) oder der erste Greifer (37) außerhalb der Kreisbahn (39) und der zweite Greifer (28) außerhalb der Kreisbahn (39) oder der erste Greifer (27) innerhalb der Kreisbahn (39) und der zweite Greifer (28) innerhalb der Kreisbahn (39) angeordnet werden.

## Claims

1. Gripping apparatus (20) for gripping at least one of several line elements (10-15) which are configured as a coil element bent in a U-shape in the form of an electrically conductive hairpin for making a coil winding of a component of an electrical machine, wherein the line element (10-15) configured as a hairpin comprises a first line element end section (16) and a second line element end section (17), the gripping apparatus comprising:
- a base body (21),
- a first gripping device (25) that comprises a first gripper (27),
- a second gripping device (26) that comprises a second gripper (28), which is arranged to that it can move relative to the base body (21), and
a controller,
**characterized in that**
the first gripping device (25) is configured
a) to grip the first line element end section (16) or
b) the second line element section (17) of a predetermined line element by means of the first gripper (27),
the second gripping device (26) is configured to move the second gripper (28) relative to the first gripper (27) in such a way that the second gripper (28) grips the predetermined line element
a) at the second line element end section (17) or
b) at the first line element end section (16),
and the gripping apparatus (20) is configured to grip different geometries of line elements (10-15) formed as a hairpin and to grip individual line elements (10-15) formed as a hairpin individually consecutively at a predetermined position.

2. Gripping apparatus (20) according to claim 1,
**characterized in that**
the first gripper (27) is designed to be stationary relative to the base body (21).

3. Gripping apparatus (20) according to claim 1,
**characterized in that**
3.1 the first gripper (27) and/or the first gripping device (25) and/or a first arm element (23), on which the first gripper (27) is disposed, is arranged to be movable relative to the base body (21) and/or relative to the second gripper (28); and/or
3.2 the first gripper (27) and/or the first gripping device (25) and/or a first arm element (23), on which the first gripper (27) is disposed, is arranged to be linearly movable; and/or
3.3 the first gripper (27) and/or the first gripping device (25) and/or a first arm element (23), is rotatably supported, specifically around an axis of rotation; and/or
3.4 the first gripper (27) is rotatable around a center of the first line element end section (16) or the second line element end section (17) to be gripped; and/or
3.5 the first gripper (27) and the second gripper (28) are offset from each other in height, specifically in a vertical direction of the gripping apparatus (20); and/or
3.6 the gripping apparatus (20) is designed for gripping a coil element bent in a U-shape, specifically an electrically conductive pin, more specifically, a hairpin.

4. Gripping apparatus (20) according to any one of the preceding claims,
**characterized in that**
4.1 the second gripping device (26) comprises a movement unit (32; 32b) which is configured to move the second gripper (28) relative to the base body (21); and/or
4.2 the second gripping device (26) comprises a movement unit (32; 32b) which is configured to move the second gripper (28) and/or a second arm element (24), on which the second gripper (28) is disposed, relative to the base body (21) along a circular path; and/or
4.3 the second gripper (28) and/or a second arm element (24), on which the second gripper (28) is disposed, is rotatably mounted, specifically around an axis of rotation, wherein the second gripping device (26) comprises a movement unit (32; 32b) which is configured to rotate the second gripper (28) and/or the second arm element (24).

5. Gripping apparatus (20) according to any one of the preceding claims,
**characterized in that**
the base body (21) comprises a base plate (22), wherein a first arm element (23) and a second arm element (24) are arranged on the base plate (22), wherein the two arm elements (23; 24) extend vertically to the base plate, wherein the first gripping device (25) is arranged on the first arm element (23) and the second gripping device (26) is arranged on the second arm element (24).

6. Gripping apparatus (20) according to any one of the preceding claims,
**characterized in that**
the first gripper (27) and the second gripper (28) each have two gripping jaws (29; 30; 29'; 30'), wherein a respective gripping surface (31) of the respective gripping jaws (29; 30; 29'; 30) is concavely formed.

7. Gripping apparatus (20) according to claim 6,
**characterized in that**
7.1 one gripping jaw each of the first gripper (27) comprises two gripping jaw elements, wherein a first gripping jaw element (29a') of a first gripping jaw (29') is assigned to a first gripping jaw element (30a') of a second gripping jaw (30'), and a second gripping jaw element (29b') of the first gripping jaw (29') is assigned to a second gripping jaw element (30b') of the second gripping jaw (30), wherein the first and the second gripping jaw elements (29a', 30a') and the second gripping jaw elements (29b', 30b') are arranged opposite each other; and/or
7.2 the first gripper (27) is designed as a double gripper.

8. Gripping apparatus (20) according to any one of the preceding claims,
**characterized in that**
the base body (21) can be coupled to a transport device for moving the gripping apparatus (20).

9. Hairpin handling device for the handling of hairpins for making a coil winding of a component of an electrical machine, the hairpin handling device comprising a gripping apparatus (20) according to claim 8 and a transport device for moving the gripping apparatus (20), as well as a controller.

10. Method of gripping line elements configured as coil elements bent in a U-shape in the form of hairpins for making a coil winding of component of an electrical machine by means of a gripping apparatus (20), wherein the gripping apparatus (20) is configured to grip different geometries of line elements formed as hairpins, wherein the gripping apparatus (20) comprises a base body (21), a first gripping device (25), which comprises a first gripper (27), and a second gripping device (26), which comprises a second gripper (28) that is arranged so that it can move relative to the base body (21), the method comprising the steps:
- arranging individual predetermined line elements (10, 11, 12, 13, 14, 15) formed as hairpins consecutively at predetermined position and gripping individually by means of the gripping apparatus (20);
- gripping
a) a first line element end section (16) or
b) a second line element end section (17)
of each predetermined line element by means of the first gripper (27) of the first gripping device (25) at the predetermined position;
- moving the second gripper (28) relative to the first gripper (27) for adjustment to a position
a) of the second line element end section (17) of the predetermined line element or
b) of the first line element end section (16) of the predetermined line element and
- gripping the second line element end section (17) of the line element or the first line element end section (16) of the line element by means of the second gripper (28).

11. Method according to claim 10,
**characterized in that**
the second gripper (28) for gripping the second line element end section (17) of the predetermined line element or the first line element end section (16) of the predetermined line element is moved along a predetermined circular path (39) to the second line element end section (17) or the first line element end section (16).

12. Method according to any one of claims 10 or 11,
**characterized in that**
several line elements are gripped consecutively by means of the gripping apparatus (20), wherein prior to the gripping of the respective line element end section (16; 17), the line element is rotated around a leg axis (19) of one of said two line element end sections (16; 17), so that the other line element end section (16; 17) is arranged on a circular path.

13. Method according to any one of claims 10 or 11,
**characterized in that**
several line elements are gripped consecutively by means of the gripping apparatus (20), wherein, prior to gripping the respective line element, the gripping apparatus (20) is aligned relative to the respective line element to be gripped and the second gripper (28) is moved relative to the first gripper (27) in such a way that the first and the second line element end sections (16, 17) of the line element can be gripped simultaneously each by the first and the second gripper (27, 28).

14. Method according to any one of claims 10 to 13,
**characterized in that**
after gripping the predetermined line element, the line element is pre-pinned, specifically in an adapter nest (40), by means of the gripping apparatus (20), wherein several line elements are consecutively pre-pinned into a wreath.

15. Method according to claim 14,
**characterized in that**,
for pre-pinning, the first gripping device (25) and the second gripping device (26) are positioned such that the first gripper (27) is arranged inside a circular path (39) and the second gripper (28) is arranged outside the circular path (39) or the first gripper (27) is arranged outside the circular path (39) and the second gripper (28) is arranged inside the circular path (39) or the first gripper (37) is arranged outside the circular path (39) and the second gripper (28) is arranged outside the circular path (39) or the first gripper (27) is arranged inside the circular path (39) and the second gripper (28) is arranged inside the circular path (39).

## Revendications

1. Appareil de préhension (20) destiné à saisir au moins l'un parmi plusieurs éléments de fil (10-15) qui sont configurés comme un élément de bobine courbé en forme de U, sous la forme d'une épingle à cheveux électriquement conductrice, pour réaliser un enroulement de bobine d'un composant d'une machine électrique, dans lequel l'élément de fil (10-15) configuré comme une épingle à cheveux comprend une première section d'extrémité d'élément de fil (16) et une deuxième section d'extrémité d'élément fil (17), l'appareil de préhension comprenant:
- un corps de base (21),
- un premier dispositif de préhension (25) qui comprend un premier préhenseur (27),
- un deuxième dispositif de préhension (26) qui comprend un deuxième préhenseur (28), agencé de manière à pouvoir se déplacer par rapport au corps de base (21), et un contrôleur,
**caractérisé en ce que**
le premier dispositif de préhension (25) est configuré
a) pour saisir la première section d'extrémité de l'élément de fil (16) ou
b) la deuxième section d'extrémité de l'élément de fil (17) d'un élément de fil prédéterminé au moyen du premier préhenseur (27),
le deuxième dispositif de préhension (26) est configuré pour déplacer le deuxième préhenseur (28) par rapport au premier préhenseur (27) de telle sorte que le deuxième préhenseur (28) saisisse l'élément de fil prédéterminé
a) au niveau de la deuxième section d'extrémité de fil (17) ou
b) au niveau de la première section d'extrémité de fil (16),
et l'appareil de préhension (20) est conçu pour saisir différentes géométries d'éléments de fil (10-15) formés en épingle à cheveux et pour saisir individuellement et successivement des éléments de ligne (10-15) formés en épingle à cheveux à une position prédéterminée.

2. Appareil de préhension (20) selon la revendication 1,
**caractérisé en ce que**
le premier préhenseur (27) est conçu pour être fixe par rapport au corps de base (21).

3. Appareil de préhension (20) selon la revendication 1,
**caractérisé en ce que**
3.1 le premier préhenseur (27) et/ou le premier dispositif de préhension (25) et/ou un premier élément de bras (23), sur lequel est disposé le premier préhenseur (27), est agencé pour être mobile par rapport au corps de base (21) et/ou par rapport au deuxième préhenseur (28); et/ou
3.2 le premier préhenseur (27) et/ou le premier dispositif de préhension (25) et/ou un premier élément de bras (23), sur lequel est disposé le premier préhenseur (27), est agencé de manière à être mobile linéairement; et/ou
3.3 le premier préhenseur (27) et/ou le premier dispositif de préhension (25) et/ou un premier élément de bras (23) sont montés de manière rotative, plus précisément autour d'un axe de rotation; et/ou
3.4 le premier préhenseur (27) peut tourner autour d'un centre de la première section d'extrémité d'élément de fil (16) ou de la deuxième section d'extrémité d'élément de fil (17) à saisir; et/ou
3.5 le premier préhenseur (27) et le deuxième préhenseur (28) sont décalés l'une par rapport à l'autre en hauteur, plus précisément dans la direction verticale de l'appareil de préhension (20); et/ou
3.6 l'appareil de préhension (20) est conçu pour saisir un élément en bobine courbé en forme de U, plus précisément une épingle électriquement conductrice, et plus particulièrement une épingle à cheveux.

4. Appareil de préhension (20) selon l'une quelconque des revendications précédentes,
**caractérisé en ce que**
4.1 le deuxième dispositif de préhension (26) comprend une unité de déplacement (32 ; 32b) qui est configurée pour déplacer le deuxième préhenseur (28) par rapport au corps de base (21); et/ou
4.2 le deuxième dispositif de préhension (26) comprend une unité de déplacement (32; 32b) qui est configurée pour déplacer le deuxième préhenseur (28) et/ou un deuxième élément de bras (24), sur lequel est disposée le deuxième préhenseur (28), par rapport au corps de base (21) le long d'une trajectoire circulaire; et/ou
4.3 le deuxième préhenseur (28) et/ou un deuxième élément de bras (24), sur lequel est disposée le deuxième préhenseur (28), est monté de manière rotative, plus précisément autour d'un axe de rotation, le deuxième dispositif de préhension (26) comprenant une unité de déplacement (32; 32b) qui est configurée pour faire tourner le deuxième préhenseur (28) et/ou le deuxième élément de bras (24).

5. Appareil de préhension (20) selon l'une quelconque des revendications précédentes,
**caractérisé en ce que**
le corps de base (21) comprend une plaque de base (22), sur laquelle un premier élément de bras (23) et un deuxième élément de bras (24) sont disposés, les deux éléments de bras (23; 24) s'étendent perpendiculairement à la plaque de base, le premier dispositif de préhension (25) étant disposé sur le premier élément de bras (23) et le deuxième dispositif de préhension (26) étant disposé sur le deuxième élément de bras (24).

6. Appareil de préhension (20) selon l'une quelconque des revendications précédentes,
**caractérisé en ce que**
le premier préhenseur (27) et le deuxième préhenseur (28) comportent chacun deux mâchoires de préhension (29; 30; 29'; 30'), dans lequel une surface de préhension respective (31) des mâchoires de préhension respectives (29; 30; 29'; 30) est de forme concave.

7. Appareil de préhension (20) selon la revendication 6,
**caractérisé en ce que**
7.1 une mâchoire de préhension du premier préhenseur (27) comprend deux éléments de mâchoire de préhension, un premier élément de mâchoire de préhension (29a') d'une première mâchoire de préhension (29') étant associé à un premier élément de mâchoire de préhension (30a') d'une deuxième mâchoire de préhension (30'), et un deuxième élément de mâchoire de préhension (29b') de la première mâchoire de préhension (29') étant associé à un deuxième élément de mâchoire de préhension (30b') de la deuxième mâchoire de préhension (30), les premiers et deuxièmes éléments de mâchoire de préhension (29a', 30a') et les deuxièmes éléments de mâchoire de préhension (29b', 30b') étant disposés en vis-à-vis; et/ou
7.2 le premier préhenseur (27) est conçue comme un préhenseur double.

8. Appareil de préhension (20) selon l'une quelconque des revendications précédentes,
**caractérisé en ce que**
le corps de base (21) peut être couplé à un dispositif de transport destiné à déplacer l'appareil de préhension (20).

9. Dispositif de manutention d'épingles à cheveux destiné à la manutention d'épingles à cheveux pour la réalisation d'un enroulement de bobine d'un composant d'une machine électrique, le dispositif de manutention d'épingles à cheveux comprenant un appareil de préhension (20) selon la revendication 8 et un dispositif de transport destiné à déplacer l'appareil de préhension (20), ainsi qu'un contrôleur.

10. Procédé de préhension d'éléments de fil configurés comme des éléments de bobine pliés en forme de U, sous la forme d'épingles à cheveux, pour la réalisation d'un enroulement de bobine d'un composant d'une machine électrique au moyen d'un appareil de préhension (20), dans lequel l'appareil de préhension (20) est configuré pour saisir différentes géométries d'éléments de fil formés en épingles à cheveux, dans lequel l'appareil de préhension (20) comprend un corps de base (21), un premier dispositif de préhension (25), qui comprend un premier préhenseur (27), et un deuxième dispositif de préhension (26), qui comprend un deuxième préhenseur (28) agencée de manière à pouvoir se déplacer par rapport au corps de base (21), le procédé comprenant les étapes suivantes:
- disposer successivement des éléments de fil individuels prédéterminés (10, 11, 12, 13, 14, 15) en forme d'épingles à cheveux à des positions prédéterminées et les saisir individuellement à l'aide de l'appareil de préhension (20);
- saisir
a) une première section d'extrémité d'un élément de fil (16) ou
b) une deuxième section d'extrémité d'un élément de fil (17) de chaque élément de fil prédéterminé à l'aide du premier préhenseur (27) du premier dispositif de préhension (25) à la position prédéterminée;
- déplacer le deuxième préhenseur (28) par rapport au premier préhenseur (27) pour l'ajuster à une position
a) de la deuxième section d'extrémité de l'élément de fil (17) de l'élément de fil prédéterminé ou
b) de la première section d'extrémité de l'élément de fil (16) de l'élément de fil prédéterminé et
- saisir la deuxième section d'extrémité de l'élément de fil (17) ou la première section d'extrémité de l'élément de fil (16) de l'élément de fil à l'aide du deuxième préhenseur (28).

11. Procédé selon la revendication 10,
**caractérisé en ce que**
le deuxième préhenseur (28), destinée à saisir la deuxième section d'extrémité de l'élément de fil (17) de l'élément de fil prédéterminé ou la première section d'extrémité de l'élément de fil (16) de l'élément de fil prédéterminé, est déplacé le long d'une trajectoire circulaire prédéterminée (39) vers la deuxième section d'extrémité de l'élément de fil (17) ou la première section d'extrémité de l'élément de fil (16).

12. Procédé selon l'une quelconque des revendications 10 ou 11,
**caractérisé en ce que**
plusieurs éléments de fil sont saisis successivement au moyen de l'appareil de préhension (20), dans lequel, avant la préhension de la section d'extrémité d'élément de fil respective (16; 17), l'élément de fil est mis en rotation autour d'un axe de branche (19) de l'une desdites deux sections d'extrémité d'élément de ligne (16; 17), de sorte que l'autre section d'extrémité d'élément de ligne (16; 17) soit disposée sur une trajectoire circulaire.

13. Procédé selon l'une quelconque des revendications 10 ou 11,
**caractérisé en ce que**
plusieurs éléments de fil sont saisis successivement au moyen de l'appareil de préhension (20), dans lequel, avant la préhension de l'élément de fil respectif, l'appareil de préhension (20) est aligné par rapport à l'élément de fil concerné à saisir et le deuxième préhenseur (28) est déplacée par rapport au premier préhenseur (27) de telle sorte que les première et deuxième sections de l'élément de fil (16, 17) de l'élément de fil puissent être saisies simultanément respectivement par le premier et le deuxième préhenseur (27, 28).

14. Procédé selon l'une quelconque des revendications 10 à 13,
**caractérisé en ce que**
après la préhension de l'élément de fil prédéterminé, celui-ci est pré-épinglé, notamment dans un logement d'adaptateur (40), au moyen de l'appareil de préhension (20), plusieurs éléments de fil étant pré-épinglés consécutivement pour former une couronne.

15. Procédé selon la revendication 14,
**caractérisé en ce que**,
pour le pré-épinglage, le premier dispositif de préhension (25) et le deuxième dispositif de préhension (26) sont positionnés de telle sorte que le premier préhenseur (27) soit disposé à l'intérieur d'une trajectoire circulaire (39) et que le deuxième préhenseur (28) soit disposé à l'extérieur de la trajectoire circulaire (39), ou bien le premier préhenseur (27) soit disposé à l'extérieur de la trajectoire circulaire (39) et le deuxième préhenseur (28) soit disposé à l'intérieur de la trajectoire circulaire (39), ou bien le premier préhenseur (37) soit disposé à l'extérieur de la trajectoire circulaire (39) et le deuxième préhenseur (28) soit disposé à l'extérieur de la trajectoire circulaire (39), ou bien le premier préhenseur (27) soit disposée à l'intérieur de la trajectoire circulaire (39) et le deuxième préhenseur (28) soit disposé à l'intérieur de la trajectoire circulaire (39).
